# EUROPÄISCHE PATENTSCHRIFT

(11) **EP 1 988 304 B1**
(45) Veröffentlichungstag und Bekanntmachung des Hinweises auf die Patenterteilung: **13.02.2013**
(21) Anmeldenummer: 08007311.7
(22) Anmeldetag: 14.04.2008
(51) Int. Cl.: F16D 25/0638, F16D 25/12

(54) **Dichtungsanordnung und nasslaufende Doppelkupplungsanordnung mit einer Dichtungsanordnung**
Sealing assembly and wet-running coupling device with a sealing assembly
Agencement d'étanchéité et agencement de double couplage par voie humide doté d'un agencement d'étanchéité

(30) Priorität: 02.05.2007 US 927299 P
(43) Veröffentlichungstag der Anmeldung: 05.11.2008
(73) Patentinhaber: Schaeffler Technologies AG & Co. KG, 91074 Herzogenaurach (DE)
(72) Erfinder: Metzinger, Manuel, 77815 Bühl (DE); Agner, Ivo, 77815 Bühl (DE); Nöhl, Oliver, 77830 Bühlertal (DE)

(56) Entgegenhaltungen:
- WO-A1-02/46632
- DE-U1- 20 310 015
- US-A1- 2001 047 918

## Beschreibung

Die Erfindung betrifft eine Dichtungsanordnung für eine druckmittelbetätigbare Stelleinrichtung einer Kupplungsanordnung zur Abdichtung einer dieser zugeordneten mit Druckmittel beaufschlagbaren Kammer gegenüber dem Innenraum der Kupplungsanordnung; ferner eine nasslaufende Doppelkupplungsanordnung mit einer Dichtungsanordnung.

Nasslaufende Doppelkupplungsanordnungen sind in einer Vielzahl von Ausführungen aus dem Stand der Technik vorbekannt. Diese weisen einen Eingang und zwei Ausgänge auf, wobei der Eingang von einer Mitnehmereinheit gebildet wird, die jeweils mit einem ersten Kupplungsteil der einzelnen Kupplungsanordnungen der nasslaufenden Doppelkupplung verbunden ist. Jede Kupplungsanordnung weist einen zweiten Kupplungsteil auf, der mit dem ersten Kupplungsteil in Wirkverbindung bringbar ist und mit dem Ausgang drehfest gekoppelt ist. Derartige Kupplungsausführungen sind häufig in Scheiben- beziehungsweise Lamellenbauweise aufgebaut, so dass der erste Kupplungsteil von einer ersten Lamellenanordnung und der zweite Kupplungsteil von einer zweiten Lamellenanordnung gebildet wird, wobei die beiden Lamellenanordnungen über eine Stelleinrichtung, in der Regel in Form eines druckmittelbetätigten Kolbenelementes, reibschlüssig miteinander in Wirkverbindung bringbar sind. Dazu weist jede der Kupplungsanordnungen eine eigene Stelleinrichtung auf, vorzugsweise in Form eines Kolbenelementes. Dem Kolbenelement ist zur Betätigung zumindest eine mit Druckmittel beaufschlagbare Kammer, vorzugsweise jedoch zwei mit Druckmittel beaufschlagbare Kammern zugeordnet, die an den beiden voneinander weggerichteten Stirnflächen des Kolbenelementes wirksam sind und wobei eine erste der mit Druckmittel beaufschlagbaren Kammern direkt als Druckkammern zur Betätigung des Kolbens dient, und die zweite einem Kolbenelement zugeordnete Kammer als Ausgleichskammer. Die Kammern sind mit einem Druckmittelversorgungs- und Führungssystem verbunden, wobei die einzelnen, einem Kolbenelement zugeordneten Kammern separat ansteuerbar sind. Über die Druckdifferenz in den beiden Kammern kann die Anpresskraft des Kolbens eingestellt werden. Dabei sind aufgrund des Nasslaufens der Lamellen, die immer in Öl laufen, die mit Druckmittel beaufschlagbaren Kammern vom Innenraum der nasslaufenden Doppelkupplung zu trennen. Die einzelnen Kupplungsanordnungen sind koaxial zueinander und in radialer Richtung ineinander und vorzugsweise mit nur geringem oder frei von Versatz in axialer Richtung zueinander angeordnet. Die Abdichtung der einzelnen Kammern gegenüber dem Innenraum oder auch gegeneinander erfolgt über Dichtanordnungen, umfassend elastische Dichteinrichtungen, wobei es sich hier um bewegte Dichteinrichtungen handelt, da diese in der Regel den Kolben gegenüber einem ortsfesten Bauelement abdichten und mit der Bewegung des Kolbens auch die Dichtfläche mitbewegt wird. Die Dichtanordnungen werden daher in der Regel direkt am Kolbenelement oder einem mit diesem kraftschlüssig verbundenen Element anvulkanisiert. Dies bedeutet, dass zum Aufbringen der Dichteinrichtung das gesamte Kolbenelement und damit ein relativ großes und je nach Ausführung im Querschnitt mit komplexer Geometrie ausgestattetes Bauelemente gehändelt und dem Vulkanisierungsprozess unterzogen werden muss. Die Geometrie des Kolbens bestimmt neben der Anordnung der Dichteinrichtung auch die Anordnung und Ausgestaltung der anderen mit der Dichteinrichtung in Wirkverbindung zu bringenden Flächenbereiche der die mit Druckmittel beaufschlagbare Kammer begrenzenden Elemente. Zur Realisierung einer sicheren Dichtfunktion ist daher eine hohe Fertigungsgenauigkeit erforderlich. Ferner ist bei Beschädigungen der Dichtflächen keine einfache Austauschbarkeit der einzelnen Dichteinrichtungen gegeben.

In DE10111202A1 und DE20310015U1 ist eine Dichtungsanordnung für eine druckmittelbetätigbare Stelleinrichtung in einer Kupplungsanordnung zur Abdichtung einer dieser zugeordneten und mit Druckmittel beaufschlagbaren Kammer, umfassend zumindest eine elastische Dichteinrichtung und einen Dichtungsträger gezeigt. Dabei ist die Dichteinrichtung auf dem Dichtungsträger aufvulkanisiert.

DE19949205A1 zeigt eine Dichtungsanordnung in einem Ausrücksystem mit einem die Dichtungsanordnung aufnehmenden Dichtungsträger.

Der Erfindung liegt daher die Aufgabe zugrunde, eine Dichtungsanordnung für den Einsatz in Kupplungsanordnungen beliebiger Bauart, insbesondere in Doppelkupplungsanordnungen zu schaffen, die durch einen einfachen Aufbau unabhängig von der Kolbenausführung charakterisiert ist und leicht austauschbar ist.

Die erfindungsgemäße Lösung ist durch die Merkmale der Ansprüche 1 charakterisiert. Vorteilhafte Ausgestaltungen sind in den Unteransprüchen beschrieben.

Erfindungsgemäß ist eine Dichtungsanordnung, insbesondere in Kupplungsanordnungen, umfassend eine Aktorik mit wenigstens einer der Aktorik zugeordneten mit Druckmittel beaufschlagbaren Kammer dadurch gekennzeichnet, dass die Dichteinrichtung zwischen zwei koaxialen Bauteilen an zumindest einem Blechelement geführt ist, das an einem, eine mit Druckmittel beaufschlagbare Kammer begrenzenden Element befestigt ist. Das Kolbenelement selbst und die, die mit Druckmittel beaufschlagbare Kammer begrenzenden Elemente sind frei von einer spanenden Bearbeitung. Die Formgebung wird auf das Blechelement verlagert, welches aufgrund seiner geringeren Dicke einfach fertigbar ist. Ferner kann die Ausgestaltung des Blechelementes in dem Bereich, der die Dichteinrichtung trägt, frei erfolgen, so dass hier eine Anpassung an unterschiedliche Querschnittsgeometrien der Dichteinrichtungen möglich ist. Das Blechelement ist einfach mit die mit Druckmittel betätigbare Kammer begrenzenden Elementen zusammenfügbar. Durch die Führung am Blechelement ist ferner eine einfache Austauschbarkeit der einzelnen Dichteinrichtung gegeben.

Bei dem Blechelement handelt es sich vorzugsweise um ein dünnes Blechelement mit einer Stärke im Bereich von 0,5 bis 1,5 mm. Dadurch kann dessen Geometrie ohne erheblichen Fertigungsaufwand an die baulichen Gegebenheiten der Einbausituation angepasst werden.

Bei dem die mit Druckmittel beaufschlagbare Kammer begrenzenden Element kann es sich um die Stelleinrichtung selbst oder eine Gehäuse- beziehungsweise Kammerwandung handeln. Die einzelne Dichteinrichtung wird vorzugsweise in einem Dichtungsträger, umfassend zwei eine Nut zur Aufnahme der Dichteinrichtung bildenden Blechelemente, geführt. Dieser Dichtungsträger ist dabei mit einem Anschlusselement, welches die entsprechende mit Druckmittel beaufschlagbare Kammer zumindest teilweise begrenzt, verbunden. Dadurch wird es möglich, eine einfache Dichtungsanordnung für unterschiedliche Einsatzfälle möglichst autark von der Kolbenausführung bereitzustellen und ferner die Herstellung erheblich zu vereinfachen.

Dabei kann eines der beiden Blechelemente von der Stelleinrichtung oder einem anderen, die mit Druckmittel beaufschlagbare Kammer begrenzenden Element in bauteilsparender Weise selbst gebildet werden oder aber gemäß einer besonders vorteilhaften, da auch vormontierbaren Ausführung, von zwei separaten Blechelementen. Im ersten Fall werden zumindest zwei die Nut bildende Anlageflächen am Blechelement, das mit dem Element, welches die mit Druckmittel beaufschlagbare Kammer begrenzt, verbunden ist, ausgeformt. Das, die mit Druckmittel beaufschlagbare Kammer begrenzende Element bildet nur eine radiale oder axiale Anlagefläche der Nut für die Dichteinrichtung aus. Dadurch kann auf eine zur Aufnahme der Dichteinrichtungen erforderliche spanende Bearbeitung an den, die Kammer begrenzenden Elementen und eine dementsprechende erforderliche Auslegung der Dicke dieser verzichtet werden. Die Kammer begrenzende Elemente bilden lediglich mit ihren ohnehin vorhandenen Stirnseiten Anlageflächen, die keiner Modifizierung bedürfen.

Die beiden Blechelemente können gemäß der zweiten Ausführung auch von separaten Blechelementen gebildet werden, die einen Dichtungsträger bilden, wobei es sich in diesem Fall in der Regel um scheibenförmige, ringförmige, ringscheibenförmige oder glockenförmige Gebilde handelt, wobei die konkrete Querschnittsgestaltung in Abhängigkeit der Einbausituation gewählt wird und durch diese zusätzliche Funktionen mit übernommen werden können. Dabei ist die aus den beiden Blechelementen gebildete Baueinheit in Form des Dichtungsträgers drehfest entweder mit einem Element der Aktorik, insbesondere dem Kolbenelement verbunden oder einem anderen ortsfesten, zumindest in axialer Richtung die mit Druckmittel beaufschlagbare Kammer begrenzenden Anschlusselement. Eine der Abmessungen der Dichteinrichtung, insbesondere der im Dichtungsträger geführten Dichteinrichtung ist dabei unabhängig von der Geometrie und /oder Dimensionierung an dem die mit Druckmittel beaufschlagbare Kammer begrenzenden Element, an welchem auch der Dichtungsträger befestigt ist, wodurch diese größer oder kleiner, beim Innenumfang größer gewählt werden kann, als die Dimensionierung des Anschlusselementes im Anschlussbereich. Die Ausbildung der Nut durch zwei separate Blechelemente erlaubt es, hier individuell auf Einbauerfordernisse und räumliche Gegebenheiten der Ausgestaltung der Kolbenelemente und der Kammerwandgestaltung einzugehen. Die Dichteinrichtung und die Anschlusselemente - Stelleinrichtung und eine weitere die Kammer begrenzende Wand - müssen in der Auslegung ihrer die Dichtung tragenden Bereiche zur Erzielung einer Dichtpaarung nicht mehr genau aufeinander abgestimmt werden, da diese Funktion nunmehr vom Dichtungsträger übernommen wird, über den in einfacher und kostengünstiger Weise auch größere Abstände ausgeglichen werden können. Ferner kann durch die variable Ausgestaltung des Dichtungsträgers und des die Dichteinrichtung tragenden Teils auch die Positionierung der Dichteinrichtung variiert werden.

Ferner werden an den in der Kupplungsanordnung beteiligten Elementen für die Betätigung, insbesondere dem Kolbenelement, keine Nuten eingearbeitet. Der Fertigungsaufwand und die Anforderung an die Fertigungsgenauigkeit sind dabei geringer als bei Einarbeitung von Nuten gemäß dem Stand der Technik speziell in die Kolbenelemente. Bei einem Dichtungsträger wird es ferner auch möglich, zwischen den in axialer Richtung bewegten Elementen, insbesondere dem Kolbenelement und den, die mit Druckmittel beaufschlagbaren Kammern begrenzenden Wänden einen größeren Abstand zu erzeugen sowie Toleranzen leichter auszugleichen.

Bezüglich der geometrischen Ausführung des einen Blechelementes oder vorzugsweise der Baueinheit des Dichtungsträgers aus zwei separaten Blechelementen und der Verbindung mit der Aktorik, insbesondere dem Kolbenelement oder einem anderen, eine mit Druckmittel beaufschlagbare Kammer begrenzenden Element bestehen eine Mehrzahl von Möglichkeiten. Die Formgebung der Nut an den Blechelementen kann bei Ausführung des Dichtungsträgers aus zwei separaten Blechelementen dabei an nur einem Blechelement erfolgen oder aber an beiden. Vorzugsweise wird eine Lösung an nur einem gewählt, wobei das zweite Blechelement dann lediglich eine axiale Anlagefläche bildet, während die andere Anlagefläche bei Dichtringen die radiale Anlageflächenfunktion mit übernimmt. Der Bearbeitungsaufwand für die Blechelemente kann somit gering gehalten werden.

Die Ausformung der Nut an den einzelnen Blechelementen selbst erfolgt in der Regel durch einfache Umformverfahren, beispielsweise Tiefziehen, Prägen. Dabei ist die Nut bei Dichteinrichtungen zwischen koaxialen Bauteilen im radial äußeren oder inneren Endbereich des Dichtungsträgers angeordnet, so dass die Dichteinrichtung, insbesondere die Dichtfläche, entweder in einer Ebene oder mit unterschiedlichem Durchmesser - bei Außendichtungen mit einem größeren Durchmesser als die maximale Erstreckung der Nut in radialer Richtung und bei Innendichtungen einem kleineren Durchmesser als die radial innere Erstreckung der Nutliegt. Vorzugsweise erstrecken sich die Dichteinrichtung und damit die Dichtfläche über die Nut in radialer Richtung hinaus.

Die beiden Blechelemente können als vormontierte Baueinheit miteinander ausgebildet sein oder aber erst bei Montage mit der Stelleinrichtung beziehungsweise einem, die mit Druckmittel beaufschlagbare Kammer begrenzenden Element zur Baueinheit zusammengefügt werden. Im ersten Fall erfolgt eine separate Verbindung zwischen den Blechelementen, im zweiten Fall werden die Verbindungen mit der Stelleinrichtung beziehungsweise dem, die mit Druckmittel beaufschlagbare Kammer begrenzenden Element zur Verbindung der Blechelemente und damit Ausformung der Nut genutzt, wodurch ein Arbeitsschritt eingespart werden kann.

Die Verbindung der Blechelemente ist vorzugsweise unlösbar, insbesondere form- oder stoffschlüssig. Die Verbindung erfolgt beispielsweise durch Durchsetzfügen, insbesondere eine Clinchverbindung. Schweißverbindungen sind ebenfalls denkbar, wobei eine umlaufende Schweißnaht oder aber Punktschweißverbindungen möglich sind.

Die geometrische Ausgestaltung der Blechelemente, insbesondere die Querschnittsausführung im Axialschnitt betrachtet erfolgt in Abhängigkeit der Einbausituation und der Anpassung an Anlageflächenbereiche an der Stelleinrichtung und den, die mit Druckmittel beaufschlagbare Kammer begrenzenden Elementen. Je nach Ausführung des Dichtungsträgers, insbesondere des am Anschlusselement angrenzenden Blechelementes sind die Blechelemente über mehr oder weniger große Bereiche mit parallelen Flächen zueinander ausgebildet. Denkbar ist es, die Erstreckungen der einzelnen Blechelemente unterschiedlich zu gestalten, so dass diese beispielsweise nicht über die gesamte axiale und/oder radiale Erstreckung aneinander anliegen. Die konkrete geometrische Ausgestaltung des Dichtungsträgers erfolgt immer in Abhängigkeit der Erfordernisse des Einsatzfalles, insbesondere des zur Verfügung stehenden Bauraumes und der geometrischen Ausgestaltung der die mit Druckmittel beaufschlagbare Kammer begrenzenden Wände sowie des Kolbenelementes unter Berücksichtigung der Kolbenbewegung bei einer Kupplungsanordnung.

Auch für die Verbindung zwischen dem Dichtungsträger aus einem oder zwei Blechelementen, insbesondere dem am Anschlusselement anliegenden Blechelement mit dem Anschlusselement bestehen eine Mehrzahl von Möglichkeiten. Die Verbindung kann durch Kraft-, Form- oder Stoffschluss erfolgen. Diese kann ferner lösbar und unlösbar sein. Vorzugsweise erfolgt die Verbindung mit dem Anschlusselement, insbesondere der Stelleinrichtung unlösbar, entweder durch Stoffschluss oder einen Formschluss oder aber eine Fügetechnik, welche beispielsweise als Durchsetz- oder Druckfügen, insbesondere Clinchen bezeichnet wird. Bei diesem handelt es sich um ein Fügeverfahren zur Verbindung von Blechelementen frei von einem Zusatzwerkstoff. Dieses stellt eine Kombination aus einem Umformverfahren und einem Fügeverfahren dar, wobei das Fügen durch plastische Deformation erfolgt. Eine weitere Möglichkeit der Verbindung besteht in einer Pressverbindung, insbesondere bei ringförmigen Dichteinrichtungen.

Die Möglichkeit eines Stoffschlusses wird beispielsweise durch Punktschweißen erzeugt, wobei hier unterschiedliche Schweißtechniken angewandt werden können. Der Formschluss wird über Nietverbindungen realisiert, wobei es sich dabei um separate Niete handelt oder aber um aus dem Anschlusselement heraus extrudierte Nieten. Erfolgt die Verbindung punktuell über den Umfang des Dichtungsträgers, wird keine geschlossene Dichtkante zwischen Dichtungsträger beziehungsweise kolbenseitigem Blechelement und der Stelleinrichtung erzeugt. In diesem Fall sind Leckageströme möglich, so dass diese durch die Verbindung gesteuert werden können. Sollen diese vermieden werden, ist entweder eine über den gesamten Umfang ununterbrochene druck- und flüssigkeitsdichte Verbindung erforderlich. Diese kann durch eine flächige Verbindung erzeugt werden oder aber durch zusätzliche Dichteinrichtungen zwischen dem kolbenseitigen Blechelement und der Stelleinrichtung selbst beziehungsweise dem die mit Druckmittel beaufschlagbare Kammer begrenzenden Element und dem an diesem anliegenden Blechelement. Je nachdem, ob über die Dichteinrichtung eine vollständige Abdichtung erfolgt, ist es erforderlich, die Verbindung zwischen den beiden Blechelementen und zwischen den Blechelementen und dem Anschlusselement ebenfalls druck- und flüssigkeitsdicht zu gestalten. Dabei kann es sich um in axialer und/oder in radialer Richtung ausgerichtete Bereiche handeln. Ferner ist zu überlegen, ob ein Leckagestrom zulässig ist oder nicht. Bei gewünschter Vermeidung eines Leckagestromes zwischen dem Dichtungsträger und einem Anschlusselement ist es dabei denkbar, im Bereich des Kontaktes zwischen diesen Dichtkanten vorzusehen, vorzugsweise eine Mehrzahl von hintereinander geschalteten Dichtkanten. Diese können im einfachsten Fall in Form von in Umfangsrichtung verlaufenden Sicken eingearbeitet werden, die nach der Verbindung des Dichtungsträgers mit dem Anschlusselement entsprechend abgedichtete Flächen bilden. Eine weitere Möglichkeit wäre der Einsatz einer Flächendichtung.

Ein besonders vorteilhafter Einsatzfall ist eine nasslaufende Lamellenkupplung, insbesondere Doppelkupplungsanordnung. Letztere umfasst eine erste Kupplungsanordnung und eine zweite Kupplungsanordnung, die zwischen einem Eingang und jeweils einem Ausgang angeordnet sind, wobei jede der beiden Kupplungsanordnungen einen ersten Kupplungsteil aufweist, der mit dem Eingang drehfest verbunden ist und einen zweiten Kupplungsteil, der mit jeweils einem Ausgang drehfest verbunden ist, wobei eine Stelleinrichtung die beiden Kupplungsteile miteinander in Wirkverbindung bringt. Die Stelleinrichtung umfasst dazu ein Betätigungselement in Form eines Kolbenelementes, das druckmittelbetätigt ist. Dazu sind dem Kolbenelement zumindest eine, vorzugsweise zwei Kammern, die mit Druckmittel beaufschlagt werden können, zugeordnet. Bei der ersten Kammer handelt es dabei um eine Druckkammer, bei der zweiten um eine Ausgleichskammer. Um die einzelnen Kammern gegen den übrigen Kupplungsinnenraum abzudichten, sind erfindungsgemäß ausgeführte Dichtungsanordnungen vorgesehen. Diese sind jeweils zwischen zwei koaxialen Bauteilen, insbesondere dem Kolbenelement und einem Anschlusselement, vorzugsweise einem eine Wandung ausbildenden Element angeordnet.

Die erfindungsgemäße Lösung wird nachfolgend anhand von Figuren erläutert. Darin ist im Einzelnen folgendes dargestellt:
- Figuren 1a und 1 b: verdeutlichen in schematisiert vereinfachter Darstellung zwei Varianten einer ersten Ausführung eines erfindungsgemäß ausgeführten Dichtungsträgers aus zwei separaten Blechelementen;
- Figur 2: verdeutlicht einen Ausschnitt aus einem Axialschnitt durch eine Stelleinheit einer nasslaufenden Doppelkupplungsanordnung mit anvulkanisierten Dichteinrichtungen gemäß dem Stand der Technik;
- Figur 3: verdeutlicht die Anwendung des erfindungsgemäßen Dichtungskonzeptes in einer Doppelkupplungsanordnung;
- Figur 4: verdeutlichen eine erste mögliche Ausführungsform der erfindungsgemäßen Ausführung und Anordnung einer Dichtungsanordnung zur Abdichtung einer Ausgleichkammer einer Doppelkupplungsanordnung;
- Figuren 5a und 5b: verdeutlichen eine zweite alternativ mögliche Ausführungsform der erfindungsgemäßen Ausführung und Anordnung einer Dichtungsanordnung gemäß Figur 4 in einer Doppelkupplungsanordnung;
- Figuren 6a und 6b: verdeutlichen eine dritte mögliche Ausführungsform einer erfindungsgemäßen Ausführung und Anordnung einer Dichtungsanordnung zur Abdichtung einer Ausgleichkammer einer Doppelkupplungsanordnung;
- Figur 7: verdeutlicht die Anwendung des erfindungsgemäßen Dichtungskonzeptes in einer Doppelkupplungsanordnung mit geclinchten Dichtungsträgern;
- Figur 8: verdeutlicht anhand eines Ausschnittes aus einem Axialschnitt einer erfindungsgemäßen Doppelkupplungsanordnung die Ausführung einer Dichtungsanordnung für eine Druckkammer;
- Figuren 9a und 9b: verdeutlichen eine mögliche Ausführungsform der erfindungsgemäßen Ausführung und Anordnung einer Dichtungsanordnung zur Abdichtung einer Druckkammer einer Doppelkupplungsanordnung;
- Figur 10: verdeutlicht eine weitere mögliche Ausführungsform der erfindungsgemäßen Ausführung und Anordnung einer Dichtungsanordnung zur Abdichtung einer Druckkammer einer Doppelkupplungsanordnung.

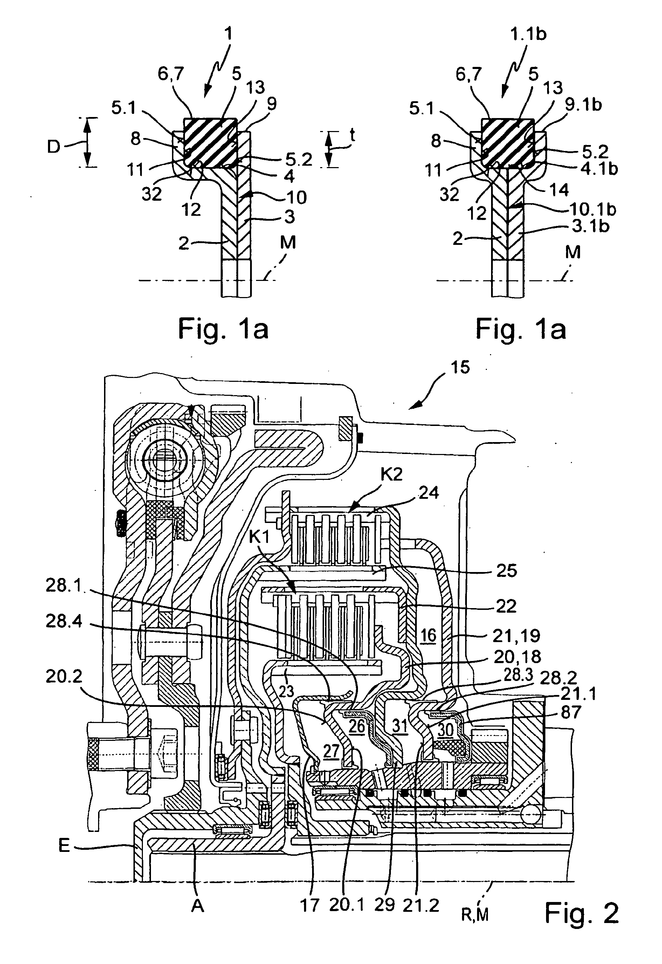

Die Figur 2 verdeutlicht einen Ausschnitt aus einem Axialschnitt einer nasslaufenden Doppelkupplungsanordnung 15 gemäß dem Stand der Technik, umfassend einen Eingang E und zwei Ausgänge A und dazwischen angeordnete Kupplungseinrichtungen, eine erste Kupplungseinrichtung K1 und eine zweite Kupplungseinrichtung K2, die jeweils über eine diesen zugeordnete druckmittelbetätigte Stelleinrichtung 18 beziehungsweise 19 betätigbar sind, wobei der einzelnen Stelleinrichtung in Form eines Kolbenelementes 20, 21 jeweils zumindest eine mit Druckmittel beaufschlagbare Kammer, vorzugsweise beidseits des Kolbenelementes 20, 21 angeordnete und mit Druckmittel beaufschlagbare Kammern zugeordnet sind. Dem Kolbenelement 20 ist eine erste mit Druckmittel beaufschlagbare Kammer 26 und eine zweite mit Druckmittel beaufschlagbare Kammer 27 zugeordnet, wobei die beiden Kammern jeweils an den einander gegenüberliegenden Stirnseiten 20.1 und 20.2 wirksam werden. Dem Kolbenelement 21 ist eine erste mit Druckmittel beaufschlagbare Kammer 30 und eine zweite mit Druckmittel beaufschlagbare Kammer 31 zugeordnet, wobei die beiden Kammern an den Stirnseiten 21.1 und 21.2 wirksam werden. Die Kammern 26 und 30 fungieren als Druckkammern und die Kammern 27 und 31 als Ausgleichskammern. Die Druckdifferenz zwischen dem einem Kolbenelement 20 beziehungsweise 21 zugeordneten Kammern 26, 27 beziehungsweise 30, 31 bestimmt die Anpresskraft des Kolbenelementes 20, 21. Die Abdichtung der einzelnen mit Druckmittel beaufschlagbaren Kammern 26, 27, 30, 31 gegenüber dem Innenraum 16 der Doppelkupplungsanordnung 15 erfolgt mittels Dichteinrichtungen 28.1 bis 28.4 zwischen dem einzelnen Kolbenelement 20 beziehungsweise 21 und einem weiteren, die mit Druckmittel beaufschlagbaren Kammern 26, 27, 30 und 31 begrenzenden Element, hier der Gehäuseteile 17 und 29 und einem weiteren, die Druckkammer 30 begrenzenden Element 87. Die Dichteinrichtungen 28.1 bis 28.4 sind dazu an den Kolbenelementen 20, 21 anvulkanisiert. Das Verfahren gestaltet sich aufgrund des dazu erforderlichen Handlings der Kolbenelemente 20, 21 relativ umständlich und es ist eine genaue Lagezuordnung zwischen den Kolbenelementen 20, 21 und den die jeweiligen Dichteinrichtungen 28.1 bis 28.4 bildenden Materialien beim Anvulkanisierungsvorgang erforderlich. Ein Austausch bei Beschädigung einer einzelnen Dichteinrichtung ist nur unter größerem Aufwand möglich. Um diese Nachteile zu vermeiden, wird erfindungsgemäß zur Abdichtung von insbesondere koaxial zueinander angeordneten Bauteilen, die in axialer Richtung relativ zueinander bewegbar sind, eine Dichtungsanordnung 1 eingesetzt, umfassend einen Dichtungsträger 10 und wenigstens eine elastische Dichteinrichtung 5, welche als einzelnes Dichtelement, Verbundelement oder aus einer Einheit aus mehreren Dichtelementen ausgeführt sein kann. Der Dichtungsträger 10 umfasst wenigstens ein Blechelement, das an einem Bauelement, welches die mit Druckmittel beaufschlagbare Kammer 26, 27, 30 oder 31 begrenzt, befestigt ist

Die Figur 1a verdeutlicht in schematisiert vereinfachter Darstellung eine mögliche Variante einer ersten Ausführungsform einer erfindungsgemäß ausgeführten Dichtanordnung 1 mit einem Dichtungsträger 10 für den Einsatz in Dichtkonzepten für Kupplungsanordnungen, insbesondere für nasslaufende Doppelkupplungsanordnungen 15 zur Abdichtung der, der Aktorik, insbesondere Stelleinrichtungen 18, 19, zugeordneten und mit einem Druckmittel beaufschlagbaren Kammern 26, 27, 30, 31 gegenüber dem Innenraum 16 und den Kammern untereinander. Der Dichtungsträger 10 umfasst in der ersten Ausführungsform zwei Blechelemente, ein erstes Blechelement 2 und ein zweites Blechelement 3, die eine Nut 4 zur Aufnahme wenigstens einer Dichteinrichtung 5 bilden. Dabei handelt es sich bei den Blechelementen 2 und 3 um ringscheibenförmige Elemente, die eine Mittenachse M aufweisen, die in Einbaulage mit der Rotationsachse R der Doppelkupplungsanordnung 15 zusammenfällt. Die Dichteinrichtung 5 ist im einfachsten Fall als Dichtring ausgeführt. Dieser ist in die Nut 4 eingelegt und wird durch die zwei Blechelemente 2 und 3 in seiner Lage gehalten. Die Dichteinrichtung 5 weist zumindest eine Dichtfläche 6 auf, die von wenigstens einer Teilfläche des Außenumfanges 7 der Dichteinrichtung 5, vorzugsweise von der gesamten den Außenumfang 7 beschreibenden Fläche, gebildet wird. Die Aufnahme der Dichteinrichtung 5 in der Nut 4 erfolgt wenigstens teilweise, zumindest insoweit, dass bei Relativbewegung der Dichteinrichtung 5 und damit der Dichtfläche 6 gegenüber einer ortsfesten Dichtfläche insbesondere in axialer Richtung kein Herausdrücken der Dichteinrichtung 5 möglich ist. Das zweite Blechelement 3 ist dazu im die Nut 4 begrenzenden Bereich, insbesondere im Endbereich 9 eben unter Ausbildung einer ebenen und in axialer Richtung weisenden Anlagefläche 13 für die Dichteinrichtung 5 ausgeführt, während das erste Blechelement 2 in seinem radialen Endbereich 8 gekröpft beziehungsweise unter Ausbildung der die Nut 4 bildenden Anlageflächen 11 und 12 geformt ist. Die Formgebung der ringscheibenförmigen Elemente kann in einfacher Weise durch Umformen, insbesondere Tiefziehen erfolgen. Andere Verfahren sind denkbar. Die Anlagefläche 11 bildet dabei eine axiale Anlagefläche, die Anlagefläche 12 eine in radialer Richtung weisende Fläche, hier zur Abstützung des Innenumfanges 32 der Dichteinrichtung 5.

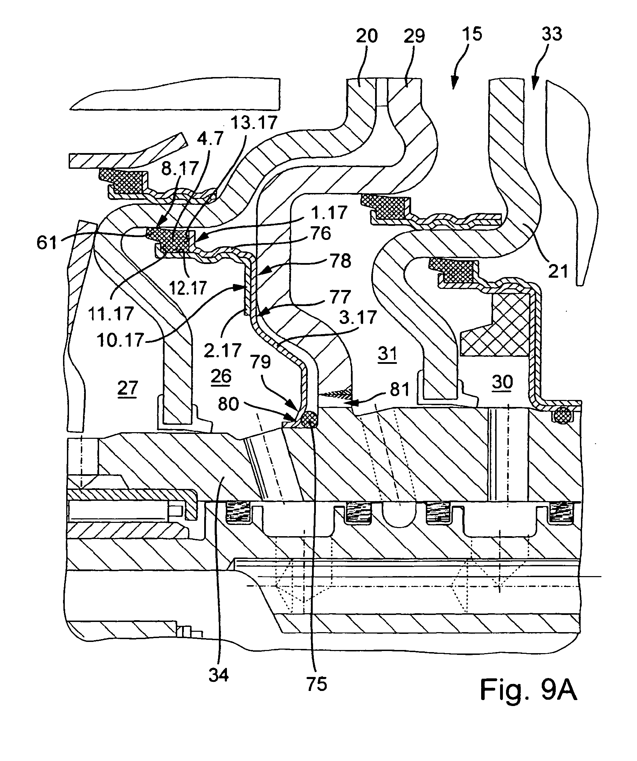

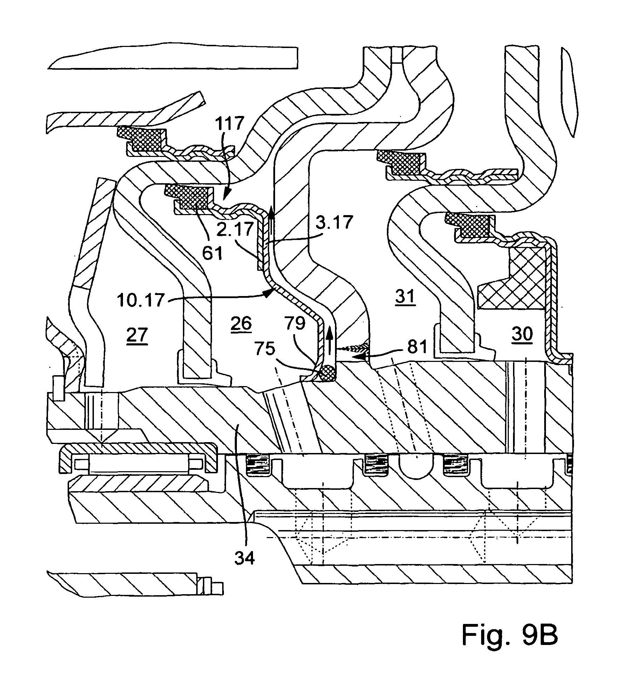

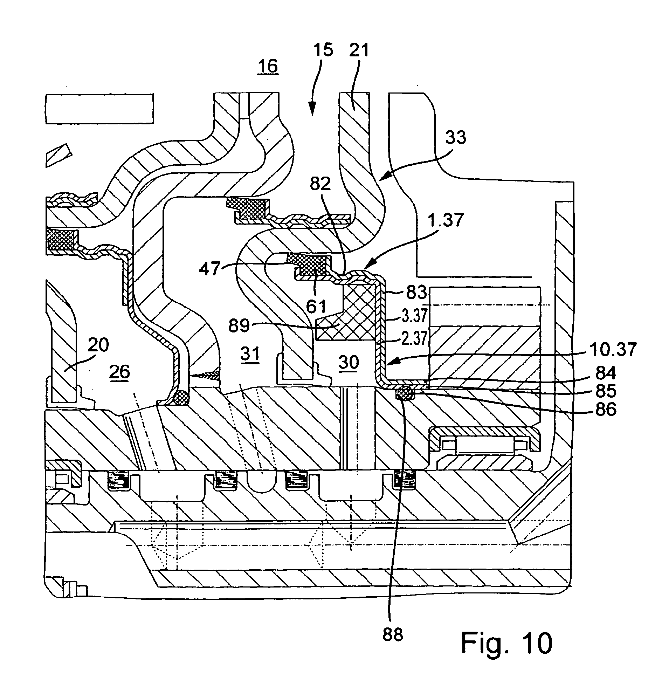

Je nach Ausführung der Dichteinrichtung 5, insbesondere der Dichtfläche 6 als in axialer Richtung sich erstreckende ebene Fläche oder geneigte Fläche, kann die Dichtfläche 6 sich nur über einen Teil des Außenumfanges 7 in radialer Richtung betrachtet erstrecken oder aber vollständig über den gesamten Außenumfang 7. Im erstgenannten Fall kann die Dichteinrichtung 5 mit ihrem Außenumfang 7 im von der Dichtfläche 6 freien Bereich bündig mit dem Endbereich 8 beziehungsweise dem Endbereich 9 am jeweiligen Blechelement 2, 3 abschließen, wie in einer konkreten Ausführung in den Figuren 9 und 10 erläutert. Andernfalls ist die Nut 4 derart ausgebildet, dass deren Tiefe t geringer ist als die Dicke D der Dichteinrichtung 5 in radialer Richtung. Die Ausführung gemäß Figur 1a verdeutlicht eine besonders vorteilhafte Ausgestaltung mit geringem Bearbeitungsaufwand zur Herstellung der Nut 4 am zweiten Blechelement 3.

Denkbar ist es jedoch auch, durch entsprechende Ausgestaltung der Endbereiche 8 und 9 der beiden Blechelemente 2 und 3, wie in der Figur 1b dargestellt, eine Nut 4.1 b durch die geformte Ausgestaltung beider Blechelemente 2, 3.1 b auszubilden, so dass die Dichteinrichtung 5 an jedem der Blechelemente 2 und 3.1 b sowohl in axialer Richtung mit ihren Stirnseiten 5.1 und 5.2 als auch in radialer Richtung mit ihrem Innenumfang 32 an in radialer Richtung nach außen weisenden Anlageflächen 12 und 14 an den beiden Blechelementen 2 und 3.1 b eine Abstützung findet. Dabei kann der Dichtungsträger 10, 10.1b als separate Baueinheit vormontiert geliefert werden. In diesem Fall wäre eine drehfeste Verbindung zwischen den beiden Blechelementen 2 und 3 beziehungsweise 2 und 3.1 b erforderlich, die durch Formschluss, Kraftschluss oder Stoffschluss erzeugt wird, oder aber der Dichtungsträger 1 wird erst in der Einbausituation zusammengesetzt, wobei dann die Anbindung bei Kupplungsanordnungen 15 an die Elemente der Aktorik, insbesondere die einzelnen Stelleinrichtungen 18, 19 oder ein anderes, eine mit Druckmittel beaufschlagbare Kammer begrenzendes Bauteil, insbesondere in Form von in axialer Richtung ortsfesten Gehäusewänden erfolgt. Die Anbindung der Dichteinrichtung 5 über den Dichtungsträger 10, 10.1 b bietet dabei den Vorteil, dass dieser in beliebigen Einbausituationen durch die angepasste Formgebung und Ausgestaltung der Blechelemente 2, 3 integrierbar ist und auch die unterschiedlichsten Dichtungslagen durch die entsprechende geometrische Formung der Blechelemente im Querschnitt betrachtet möglich sind. Insbesondere bei größeren Anschlussbauteilen bietet dies den Vorteil, dass die einzelnen Dichteinrichtungen 5 in einer erfindungsgemäßen Dichtungsanordnung 1 hier ohne großen Aufwand an den Anschlusselementen auf einfache Art und Weise integrierbar und auch nachrüstbar sind. Ein besonders vorteilhaftes Einsatzgebiet für die erfindungsgemäße Dichtungsanordnung 1 sind nasslaufende Doppelkupplungsanordnungen.

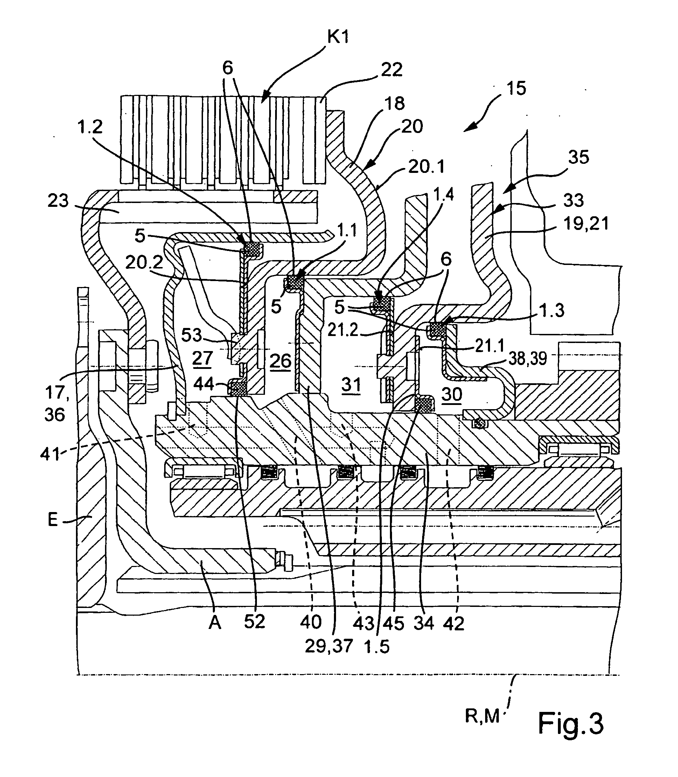

Die Figur 3 verdeutlicht dabei anhand eines Ausschnittes aus einem Axialschnitt den Einsatz erfindungsgemäßer Dichtungsanordnungen 1 mit einem Dichtungsträger 10 in Dichtungskonzepten für die Stelleinheit 33 in Doppelkupplungsanordnungen 15. Die Doppelkupplungsanordnung 15 umfasst eine erste Kupplungseinrichtung K1 und eine zweite Kupplungseinrichtung K2, wobei K2 hier nicht dargestellt ist. Der Grundaufbau entspricht dem in Figur 2 beschriebenen, weshalb für gleiche Elemente die gleichen Bezugsziffern verwendet werden. Dabei ist jeder der Kupplungseinrichtungen K1 und K2 eine Stelleinrichtung 18 beziehungsweise 19 zugeordnet, umfassend im einfachsten Fall jeweils ein Kolbenelement 20 und 21. Diese wirken auf die einzelnen Kupplungseinrichtungen K1, K2, um die einzelnen Kupplungsteile miteinander in Wirkverbindung zu bringen. Jede Kupplungseinrichtung K1 und K2 umfasst dabei einen ersten Kupplungsteil 22 beziehungsweise 24 und einen zweiten Kupplungsteil 23 beziehungsweise 25, wobei jeweils der erste Kupplungsteil 22 der ersten Kupplungseinrichtung K1 mit dem Eingang E drehfest verbunden ist, während der erste Kupplungsteil 24 der zweiten Kupplungseinrichtung K2 ebenfalls mit dem Eingang E verbunden ist und jeweils der zweite Kupplungsteil 23 der ersten Kupplungseinrichtung K1 und der zweite Kupplungsteil 25 der zweiten Kupplungseinrichtung K2 mit einem Ausgang A der Doppelkupplungsanordnung 15 gekoppelt sind. Die einzelnen Ausgänge A sind jeweils mit einer hier nicht dargestellten Getriebeeingangswelle eines nachgeordneten Getriebes koppelbar oder bilden diese. Erster Kupplungsteil und zweiter Kupplungsteil sind bei Ausführung als Scheibenkupplung in Scheibenform ausgeführt, vorzugsweise in Lamellenbauweise. Die Kraftübertragung erfolgt durch Reibschluss durch die Anpressung zwischen erstem und zweitem Kupplungsteil 22 und 23 beziehungsweise 24 und 25, was über die Stelleinrichtungen 18 und 19, insbesondere die Kolbenelemente 20 und 21, realisiert wird. Zur Betätigung der Kolben 20 und 21 sind jedem einzelnen Kolbenelement 20 und 21 mit Druckmittel beaufschlagbare Kammern zugeordnet, wobei diese mit Druckmittel beaufschlagbaren Kammern direkt auf eine der Kolbenstirnflächen wirken. Dem ersten Kolbenelement 20 ist eine erste mit Druckmittel beaufschlagbare Kammer 26 zugeordnet und eine zweite mit Druckmittel beaufschlagbare Kammer 27, die an den einander gegenüberliegenden Stirnseiten 20.1, 20.2 des Kolbenelementes 20 wirksam werden. In Analogie dazu ist eine erste mit Druckmittel beaufschlagbare Kammer 30 und eine zweite mit Druckmittel beaufschlagbare Kammer 31 dem Kolbenelement 21 zugeordnet, wobei die erste mit Druckmittel beaufschlagbare Kammer 30 hier an der Stirnseite 21.1 des Kolbenelementes 21 und die zweite mit Druckmittel beaufschlagbare Kammer 31 an der Stirnseite 21.2 des Kolbenelementes 21 wirksam wird. Die ersten in Wirkrichtung des Kolbenelementes 20, 21 gegen die Kupplungseinrichtungen K1 und K2 wirkenden Kammern 26, 30 fungieren dabei als Druckkammern, während die anderen an der gegenüberliegenden Stirnseite 20.2, 21.2 wirksam werdenden mit Druckmittel beaufschlagbaren Kammern 27 und 31 als Ausgleichskammern fungieren. Je nach Einstellung der Druckverhältnisse in beiden, einem Kolbenelement 20, 21 zugeordneten Kammern wird die Anpresskraft des Kolbenelementes 20, 21 variiert. Das einzelne Kolbenelement 20 beziehungsweise 21 ist zu diesem Zweck in axialer Richtung verschiebbar geführt, jedoch vorzugsweise mit dem Eingang E wenigstens mittelbar drehfest verbunden. Die Verbindung erfolgt hier beispielhaft über eine entsprechende Kolbennabe 34, an welcher die Kolbenelemente 20, 21 und die Wandungen des Kupplungsgehäuses 35 geführt sind. Bei dieser Ausführung sind die einzelnen Druckkammern 26, 27, 30, 31 jeweils über wenigstens eine Dichtungsanordnung 1.1, 1.2, 1.3, 1.4 und 1.5 abgedichtet. Eine Dichtungsanordnung 1.2 ist dabei zwischen einem in axialer Richtung ortsfesten Bauteil 36, welches als Gehäusewandung 17 innerhalb der Kupplungsanordnung 15 fungiert, angeordnet. Die Dichtungsanordnung 1.2 dient der Abdichtung der dem Kolbenelement 20 zugeordneten zweiten, mit Druckmittel beaufschlagbaren Kammer 27. Die Dichtungsanordnung 1.1 ist zwischen einem weiteren in axialer Richtung ortsfesten Bauteil 37 in Form des Gehäuseteils 29 und dem Kolbenelement 20 angeordnet und dient der Abdichtung der mit Druckmittel beaufschlagbaren Kammer 26. In Analogie gelten diese Aussagen auch für das zweite Kolbenelement 21 und die diesem zugeordneten mit Druckmittel beaufschlagbaren Kammern 30 und 31, wobei die erste mit Druckmittel beaufschlagbare Kammer 30 über eine Dichtungsanordnung 1.3 und 1.5 abgedichtet wird und die Dichtungsanordnung 1.4 der Abdichtung der mit Druckmittel beaufschlagbaren Kammer 31 dient. Die einzelnen Dichtungsanordnungen 1.3, 1.5 und 1.4 sind dabei jeweils zwischen einem in axialer Richtung ortsfesten Gehäuseteil und dem Kolbenelement 21 angeordnet, wobei die Dichtungsanordnung 1.3 zwischen einem Bauteil 38 in Form einer Gehäusewandung 39 angeordnet ist, während die Dichtungsanordnung 1.4 zwischen Kolbenelement 21 und Gehäusewandung 29 bildenden Bauteil 37 angeordnet ist. Die Dichtungsanordnung 1.5 ist zwischen Kolbennabe 34 und Kolbenelement 21 angeordnet. Dabei können die einzelnen Gehäusewandungen bildenden Gehäuseteile drehfest mit dem Eingang E der Kupplungsanordnung verbunden sein und mitrotieren. Dies bedeutet, dass die Dichteinrichtung 5, insbesondere die ausgebildeten Dichtflächen 6 der einzelnen Dichteinrichtungen 5 in Umfangsrichtung sich nicht relativ zu den benachbarten beziehungsweise den Anlageflächen bildenden Bauteilen bewegen müssen, jedoch aufgrund der Bewegbarkeit des Kolbenelementes 20 beziehungsweise 21 auf jeden Fall in axialer Richtung bewegbar sind oder mit einer bewegbaren Fläche in der Dichtpaarung zusammenwirken.

Für die einzelnen Dichtungsanordnungen 1.1 bis 1.5 bestehen nunmehr mehrere Möglichkeiten der Ausgestaltung und der Anbindung an die Kolbenelemente 20 und 21, insbesondere wird die einzelne mit Druckmittel beaufschlagbare Kammer 26, 27, 30 und 31 immer zwischen dem Kolbenelement 20 beziehungsweise 21 und einem Anschlusselement abgedichtet. Damit können sich die Druckverhältnisse in den einzelnen mit Druckmittel beaufschlagbaren Kammern 26, 27, 30 und 31 frei von den Verhältnissen innerhalb des Innenraumes 16 der Kupplungsanordnung einstellen, insbesondere wenn es sich hier um eine nasslaufende reibschlüssige Kupplung wie eine Lamellenkupplung handelt, bei der die Lamellen in Öl laufen. Die einzelnen mit Druckmittel beaufschlagbaren Kammern sind mit entsprechenden Druckmittelzufuhr- beziehungsweise Abfuhrkanälen verbunden, wozu diese wenigstens jeweils einen Anschluss 40, 41, 42 und 43 aufweisen. Die Kanäle können miteinander in Wirkverbindung stehen und die Verhältnisse in den mit Druckmittel beaufschlagbaren Kammern 26, 27, 30, 31 über Mittel zur Steuerung des Betriebs- beziehungsweise Druckmittelflusses eingestellt und zumindest gesteuert werden.

Die Dichtungsanordnung 1.2 umfasst zwei Dichteinrichtungen, eine Dichteinrichtung 5 und eine weitere Dichteinrichtung 44, die zwischen Kolbenelement 20 und Kolbennabe 34 angeordnet ist. Ferner ist eine weitere Dichtungsanordnung 1.5 zwischen dem Kolbenelement 21 und der Kolbennabe 34 vorgesehen.

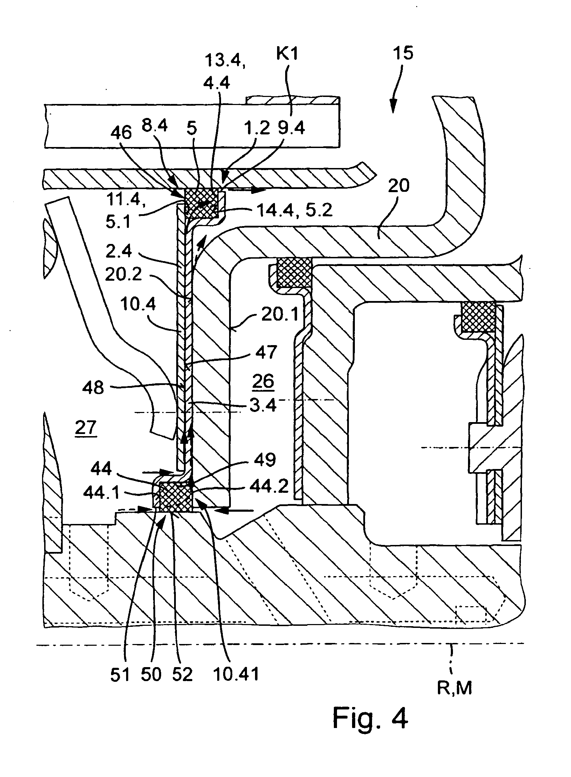

Die Figur 4 verdeutlicht dabei anhand eines vergrößerten Ausschnittes aus einer Querschnittsdarstellung der Doppelkupplungsanordnung 15 gemäß Figur 3 das Dichtkonzept der Abdichtung der Kammer 27 durch die Dichtungsanordnung 1.5, welche zwischen dem Kolbenelement 20 und den Anschlusselementen, die die mit Druckmittel beaufschlagbare Kammer 27 begrenzen, angeordnet ist. Die Dichtungsanordnung 1.2 umfasst dazu zwei Dichteinrichtungen 5 und 44, die an einem Dichtungsträger 10.4 angeordnet und geführt sind. Der Dichtungsträger 10 besteht aus zwei Blechelementen 2.4 und 3.4, die an ihren Stirnflächen 47 und 48 aneinander liegen und wobei die Stirnfläche 47 des ersten Blechelementes 2.4 im Bereich des Außenumfanges 46 im in radialer Richtung ausgebildeten Endbereich 8.4 eine Anlagefläche 11.4 für die Dichteinrichtung 5 in axialer Richtung bildet, während das zweite Blechelement 3.4 die Nut 4.4 ausformt, indem der Endbereich 9.4 des zweiten Blechelementes 3.4 im Querschnitt betrachtet L-förmig ausgebildet ist und eine Anschlagsfläche 14.4 in radialer Richtung und 13.4 in axialer Richtung für die Dichteinrichtung 5 bildet. Ferner umfasst die Dichtungsanordnung 1.2 eine zweite Dichteinrichtung 44, die im Bereich des Innenumfanges 50 des Dichtungsträgers 10.4 angeordnet ist und bei Führung des Kolbenelementes 20 beabstandet zu der mit dem Eingang E gekoppelten Kolbennabe 34 die mit Druckmittel beaufschlagbare Kammer 27 gegenüber der mit Druckmittel beaufschlagbaren Kammer 26 weitestgehend abdichtet. Dazu ist der Dichtungsträger 10.4, insbesondere das kolbenseitige Blechelement 3.4 auch mit einer entsprechenden Formgebung im radial inneren Endbereich ausgeführt. Die Nut am Innenumfang 50 ist mit 49 bezeichnet. Diese wird jedoch nur zum Teil vom Dichtungsträger 10.4 gebildet. Das kolbenseitig angeordnete Blechelement 3.4 übernimmt hier zusammen mit dem Kolbenelement 20 die Funktion eines Dichtungsträgers, d.h. der Dichtungsträger 10.4 ist Bestandteil eines weiteren aus Kolbenelement 20 und Blechelement 3.4 gebildeten Dichtungsträgers 10.41. Zur Einsparung von Bauraum und Material können Dichtungsträger 10.4 und10.41 somit gemeinsam genutzte Bauelemente, insbesondere Blechelemente aufweisen. Der Dichtungsträger 10.4 stützt hier die beiden Dichtungen 5 am Außenumfang und 44 am Innenumfang 50. Dabei wird die Funktion des Dichtungsträgers 10.4 für die Dichtungseinrichtung 44 am Innenumfang 50 vom Blechelement 3.4 und direkt vom Kolbenelement 20 übernommen, so dass die Dichteinrichtung 44 direkt in axialer Richtung zwischen dem zweiten scheibenförmigen Element 3.4 und dem Kolbenelement 20 geführt ist. Die Dichtfläche 52 der Dichteinrichtung 44 in radialer Richtung wird hier vom Innenumfang der Dichteinrichtung 44 gebildet, vorzugsweise von der gesamten den Innenumfang beschreibenden Fläche der Dichteinrichtung 44. Zur Führung der beiden Dichteinrichtungen 5 und 44 ist das zweite Blechelement 3.4 im Querschnitt Doppel-S-förmig ausgeführt beziehungsweise im radial äußeren Bereich und im radial inneren Bereich jeweils in entgegengesetzter Richtung umgeformt, insbesondere tiefgezogen. Der Dichtungsträger 10.4 ist hier drehfest mit dem Kolbenelement 20 verbunden. Zur Verbindung sind theoretisch alle Möglichkeiten des Kraft- oder Form- oder Stoffschlusses denkbar. Die Figur 3 verdeutlicht dabei eine Möglichkeit des Formschlusses durch Vernietung. Die drehfeste Kopplung erfolgt in dieser Ausführung unlösbar durch Vernietung mit aus dem Kolbenelement 20 extrudierten Nieten 53. Denkbar wäre hier jedoch auch eine mögliche Ausführung mit Punktverschweißen oder Clinchen. Die Figur 3 verdeutlicht dabei den Schnittverlauf im Axialschnitt durch die Vernietung der Dichtanordnung 1.2, die Figur 4 den Schnittverlauf im von der Vernietung freien Bereich.

Als Dichteinrichtungen 5 und 44 können Teflonringe, elastische Formringe, in Form von X-Ringen oder Schmetterlingsringen oder aber elastische Lippenringe eingesetzt werden. Bei allen handelt es sich immer um berührende und bewegliche Dichtungen.

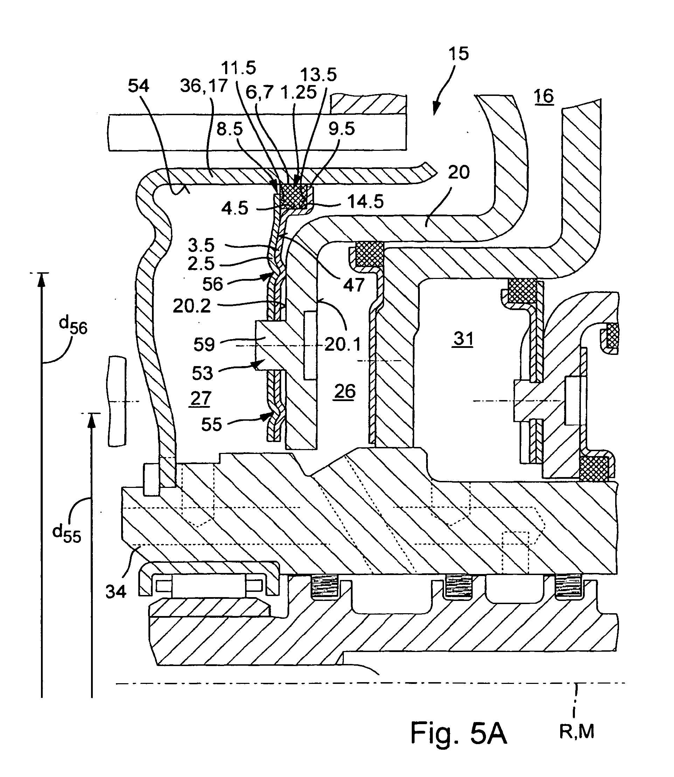

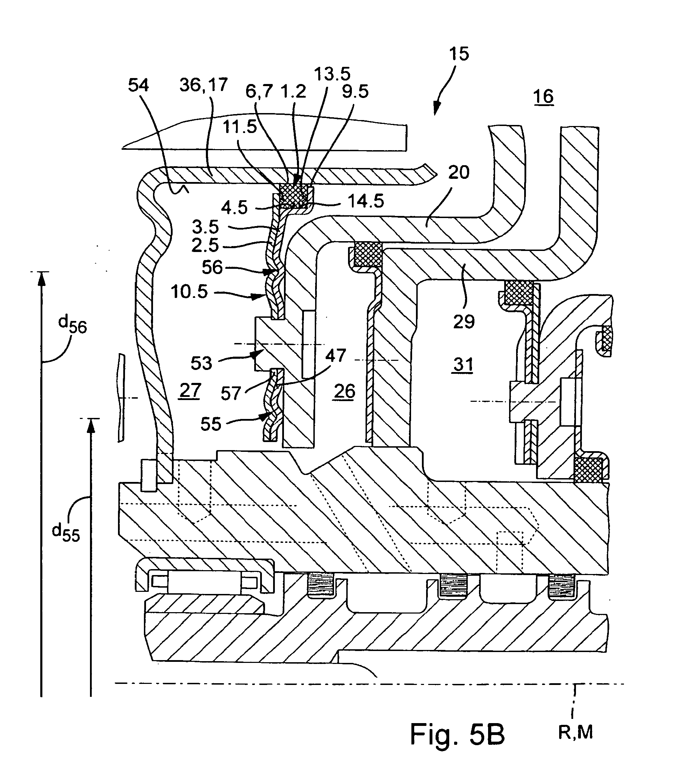

Zur Vermeidung von Leckagen ist keine zusätzliche Abdichtung an den einzelnen Blechelementen 2.4 und 3.4 nötig. Hier übernehmen die beiden Dichtungen 5 und 44 diese Funktion. Auch wenn eine mögliche Leckage zwischen den beiden Blechelementen 2.4 und 3.4 hindurchtritt, übernehmen die Dichtfläche 6 gegenüber dem ortsfesten Bauteil 36 und die in axialer Richtung ausgerichtete Dichtflächen 5.1 und 5.2 der Dichteinrichtung 5 mit dem Dichtungsträger 10.4 sowie 44.2 mit dem Kolbenelement 20 diese Aufgabe unter der Voraussetzung, dass die Verbindung der beiden Blechelemente 2.4 und 3.4 mit dem Kolbenelement 20 druckdicht ist. Ferner wird der mögliche Leckagestrom, der nicht über die Dichtflächen 6, 5.1, 5.2 und 44.2 abgehalten werden kann, bei nicht druckdichter Verbindung zwischen dem kolbenseitigen Blechelement 3.4 des Dichtungsträgers 10.4 sowie 10.41 und der Stirnfläche 20.2 des Kolbenelementes 20 geführt. Zusätzlich kann ein Leckagepfad zwischen dem Blechelement 3 und dem Kolbenelement 20 mittels an die Bleche angeformten Voll- beziehungsweise Halbsicken, wie in Figur 5a und 5b beispielhaft dargestellt, oder mittels einer zusätzlich eingelegten Dichtung, wie zum Beispiel Papierdichtung, verhindert werden.

Verdeutlicht die Figur 4 eine erste mögliche Ausführungsform der Dichtungsanordnung 1.2 zur Abdichtung der ersten äußeren Ausgleichskammer, welche der mit Druckmittel beaufschlagbaren Kammer 27 entspricht, verdeutlichen die Figuren 5a und 5b eine weitere mögliche Ausführung für die Dichtungsanordnung 1.25. Bei der Ausführung gemäß den Figuren 5a und 5b erfolgt die Abdichtung lediglich der Ausgleichskammer, das heißt der mit Druckmittel beaufschlagbaren Kammer 27 zwischen dem ortsfesten Bauteil 36 und dem Kolbenelement 20. Eine Abdichtung dieser mit Druckmittel beaufschlagbaren Kammer 27 gegenüber der mit Druckmittel beaufschlagbaren Kammer 26, welche als Druckkammer fungiert, ist hier nicht vorgesehen. Daher ist lediglich eine in radialer Richtung äußere Dichteinrichtung 5 vorgesehen. Die Dichteinrichtung 5 ist hier über einen Dichtungsträger 10.5 am Kolbenelement 20 befestigt. Der Dichtungsträger 10.5 besteht hier aus zwei scheibenförmigen Blechelementen 2.5 und 3.5, die eine Nut 4.5 zur Aufnahme der Dichteinrichtung 5 bilden. Die Dichteinrichtung 5 bildet mit ihrem Außenumfang 7 vorzugsweise vollständig eine Dichtfläche 6, welche mit einer am ortsfesten Bauteil 36 ausgebildeten in radialer Richtung zur Dichtfläche 6 weisenden Fläche 54 eine Dichtpaarung bildet. Die Nut 4.5 ist derart ausgeführt, dass das zweite kolbenseitige Blechelement 3.5 in seinem in radialer Richtung äußeren Endbereich 9.5 geformt ausgeführt ist und eine radiale Anlagefläche 14.5 und eine axiale Anlagefläche 13.5 für die Dichteinrichtung 5 bildet, während das erste Blechelement 2.5 mit seiner zum zweiten Blechelement weisenden Stirnfläche 47 im radial äußeren Endbereich 8.5 eine Anlagefläche 11.5 in axialer Richtung für die Dichteinrichtung 5 bildet. Um einen Übertritt eines Leckagestromes vom mit Druckmittel beaufschlagbaren Raum 27 nach außerhalb in Richtung des Innenraumes 16 der Kupplungsanordnung zu vermeiden, ist der Dichtungsträger 10.5 mit einer oder mehreren angeformten Dichtkanten 55 und 56, die in Leckagestromrichtung hintereinander geschaltet sind, insbesondere in radialer Richtung hintereinander geschaltet sind und sich in Umfangsrichtung über den gesamten Umfang des Dichtungsträgers 10.5 erstrecken, ausgebildet, wobei die Erstreckung auf einem bestimmten Durchmesser d₅₅ und d₅₆ für die einzelnen Dichtkanten 55 und 56 erfolgt. In der Figur 5a sind diese Dichtkanten 55 und 56 durch Vollsicken erzeugt. Denkbar ist jedoch auch eine Ausführung als Halbsicke. Der Dichtungsträger 10.5 ist drehfest mit dem Kolbenelement 20 verbunden. Die drehfeste Verbindung wird hier beispielhaft über mit aus dem Kolbenelement extrudierten Nieten 53 vorgenommen.

Die Vorspannung an den einzelnen Dichtstellen, insbesondere den Dichtkanten 55 und 56, resultiert dabei aus der elastischen Verformung der Blechelemente 2.5 und 3.5 beim Vernieten. Zeigt die Figur 5a den Zustand vor dem Vernieten, verdeutlicht die Figur 5b den Zustand nach dem Vernieten. Dabei wird ersichtlich, dass nach dem Vernieten gemäß Figur 5b die Blechelemente 2.5 und 3.5 zwischen den Dichtkanten 55 und 56 jeweils einen Rücksprung 57 beziehungsweise 58 aufweisen. Beim Nietvorgang werden im Bereich des Nietschaftes 59 die Blechelemente 2.5 und 2.5 elastisch so verformt, dass diese am Kolbenelement 20 mit einem Teilbereich ihrer zum Kolbenelement 20 weisenden Stirnfläche flächig anliegen. Die vernieteten Teile haben dann keinen Differenzabstand mehr miteinander.

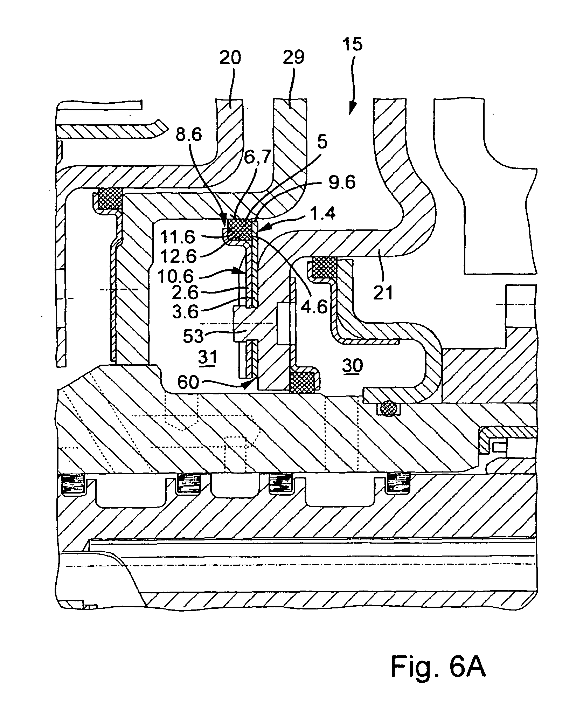

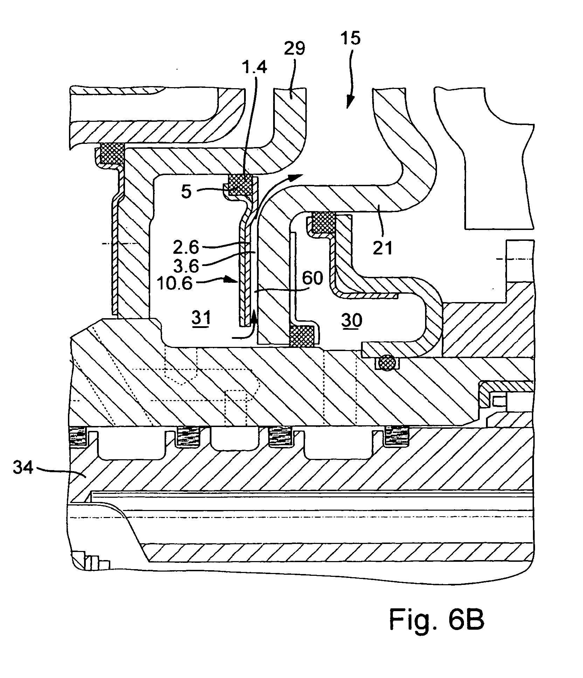

Die Figuren 6a und 6b verdeutlichen Ausführungen der Dichtungsanordnung 1.4 zur Abdichtung der dem zweiten Kolbenelement 21 zugeordneten Ausgleichskammer in Form der zweiten mit Druckmittel beaufschlagbaren Kammer 31. Auch diese Dichtungsanordnung 1.4 umfasst einen Dichtungsträger 10.6 gemäß der Erfindung. Dieser besteht aus zwei separaten Blechelementen 2.6 und 3.6, wobei diese eine Dichteinrichtung 5 in der Nut 4.6 tragen. Die Nut 4.6 wird hier auch wieder von den Endbereichen 8.6 und 9.6 der beiden Blechelemente 2.6 und 3.6 gebildet, wobei im dargestellten Fall das kolbenseitige Blechelement 3.6 als ebenes Blechelement 3.6 ausgebildet ist, während das erste Blechelement 2.6 im Endbereich 9.6 im Querschnitt s-förmig gebogen ausgeführt ist und eine Anschlagfläche 12.6 in radialer und 11.6 axialer Richtung für die Dichteinrichtung 5 bildet. Die Dichteinrichtung 5 bildet mit ihrem Außenumfang 7 eine Dichtfläche 6, die mit einem einen Innenumfang beschreibenden Teilbereich am Gehäuseteil 29 die Dichtpaarung bildet. Der Dichtungsträger 10.6 ist drehfest mit dem Kolbenelement 21 verbunden, vorzugsweise hier ebenfalls mittels aus dem Kolbenelement 21 extrudierten Nieten 53. Die Vernietung erfolgt zueinander beabstandet in Umfangsrichtung, vorzugsweise mit gleichmäßigem Abstand. Andere Möglichkeiten sind denkbar. In dem nicht vernieteten Bereich zwischen dem Kolbenelement 21 und dem Dichtungsträger 10.6 wird hier eine Verbindung zum restlichen Kupplungsinnenraum 16 geschaffen. Diese dient der Entlüftung beim Befüllen der Ausgleichskammer für die Kupplungseinrichtung K2, d.h. die äußere Kupplung und als Überlauf 60. Der Überlauf 60 hat im Wesentlichen zwei Funktionen, die Begrenzung des Ausgleichsdruckes des rotierenden Ölringes aufgrund des definierten Innendurchmessers des Ölringes und Überlauf für das durch den Kolbenhub verdrängte Ölvolumen. Die Figur 6a verdeutlicht dabei die Ausführung im durch die Vernietung gelegten Schnittverlauf, während in der Figur 6b die Ausführung der Dichtungsanordnung 1.4 den Schnittverlauf außerhalb der Vernietung 53 verdeutlicht, aus der der Überlauf 60 zwischen den einzelnen Kammern, insbesondere der Ausgleichskammer 31 und dem Innenraum 16 der Kupplungsanordnung 15, erkennbar ist.

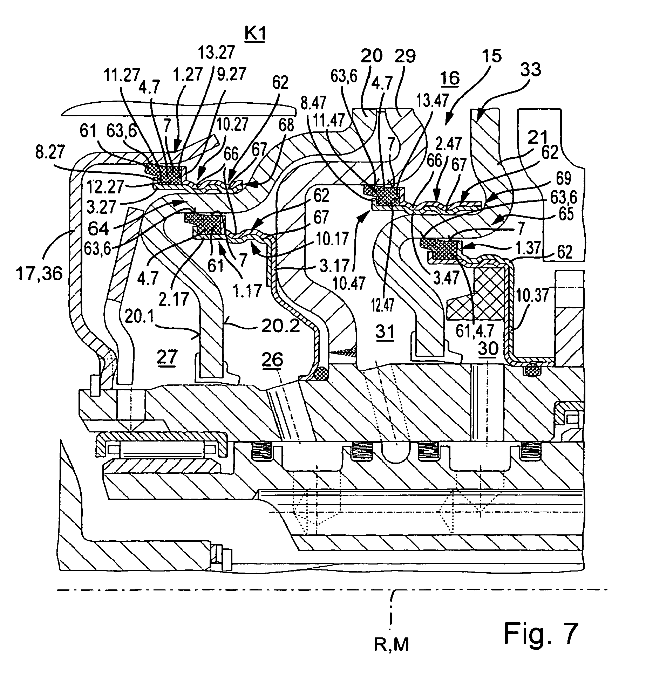

Verdeutlichen die Figuren 1 bis 6 im wesentlichen Dichtungsträger 10 mit scheibenförmiger Ausführung, verdeutlicht Figur 7 einen Ausschnitt aus einer Stelleinheit einer Doppelkupplungsanordnung 15 gemäß Figur 3, bei welcher die Dichtungsträger 10 aus zwei Blechelementen 2 und 3 bestehen, die auf verschiedenen Art und Weise miteinander drehfest verbunden sind und die im wesentlichen in Anpassung an die Formgebung der Anschlusselemente sich in radialer Richtung erstrecken, zeigt Figur 7 eine Ausführung für die Dichtungsanordnungen 1.17, 1.27, 1.37, 1.47 mit Dichtungsträgern 10.17, 10.27, 10.37, 10.47 aus zwei Blechelementen, die mittels Clinchverbindung verbunden sind und ferner eine Ausführung der Dichtungsträgers 10.27, 10.47 als ringförmiges Element. Die Dichtungsanordnungen 1.17, 1.27, 1.37, 1.47 weisen jeweils einen Dichtungsträger 10.17, 10.27, 10.37, 10.47 auf, welcher vorzugsweise aus zwei Blechelementen 2.17, 2.27, 2.37, 2.47 und 3.17, 3.27, 3.37, 3.47 besteht. Dabei werden die beiden Blechelemente jeweils mittels einer Clinchverbindung 62 miteinander formschlüssig verbunden. Die einzelnen Dichtungsträger 10.17, 10.27, 10.37, 10.47 tragen hier Dichtungen 61, wobei die Dichtungsträger 10.17, 10.27, 10.37, 10.47 derart ausgeführt sind, dass diese in ihren Endbereichen die Nuten 4.7 zur Aufnahme der Dichteinrichtung 61 ausformen.

Die Dichtungsträger 10.27 und 10.47 sind hier ringförmig ausgebildet, das heißt, diese weisen keine axialen, sondern radiale Anlageflächen an den Anschlusselementen auf. Dabei bilden jeweils die kolbenseitigen Blechelemente 3.27, 3.47, welche die in radialer Richtung inneren Blechelemente bilden, in ihren axialen Endbereichen 8.27 und 8.47 eine axiale Anschlagfläche 11.27 beziehungsweise 11.47 und eine radiale Anschlagfläche 12.47 und 12.27 für die Dichteinrichtungen 61. In Analogie bildet das weitere Blechelement 2.27, 2.47 die der axialen Anlagefläche 11.27 beziehungsweise 11.47 gegenüberliegende Anlagefläche 13.27, 13.47 in axialer Richtung für die Dichteinrichtung 61 aus. Die Dichteinrichtung 61 ist hier derart ausgeführt, dass diese mit einem Teilbereich 63 ihres Außenumfanges 7 die Dichtfläche 6 ausbildet, die mit dem ortsfesten Bauteil 17, 36 beziehungsweise 29 zusammenwirkt. Aufgrund des nicht vollständigen Anliegens der vom Außenumfang 7 gebildeten Fläche am die andere Dichtfläche der Dichtpaarung bildenden Element kann die Dichteinrichtung 61 in einem Endbereich derart ausgeführt sein, dass diese mit der Außenkante der axialen Anschlagfläche des jeweiligen Blechelementes, hier des Blechelementes 2.27, 2.47 in einer Ebene liegt. Es wäre sogar denkbar, hier bei entsprechendem Versatz auch eine Ausführung der Dichteinrichtung in diesem Bereich bereitzustellen, die innerhalb der Nut 4.7 liegt.

Sollte die Dichtwirkung dabei an den erzeugten Dichtkanten, insbesondere den radialen und axialen mit der Dichteinrichtung 61 zusammenwirkenden Anlageflächen an dem Dichtungsträger und den, die weitere Dichtfläche der Dichtpaarung bildenden Elemente nicht ausreichen, übernimmt die Clinchverbindung 62 die Funktion des Abdichtens zwischen den beiden Blechelementen 2.27 und 3.27 beziehungsweise 2.47 und 3.47. Die radiale Fixierung der beiden Blechelemente 2.27 und 3.27 beziehungsweise 2.47 und 3.47. erfolgt mittels Aufpressen mit Übermaß auf einen zylindrischen Bereich 64 und 65 an den Kolbenelementen 20 und 21 beziehungsweise einen in radiale Richtung weisenden einen Außenumfang bildenden Bereich der Kolbenelemente 20 beziehungsweise 21. Vorzugsweise sind ferner Vollsicken 66 und 67 an den Dichtungsträgern 10.27, 10.47 vorgesehen. Dieser Kontakt an den Vollsicken 66 und 67 führt zu einer Dichtwirkung zwischen dem in radialer Richtung inneren Blechelement, hier dem kolbenseitigen Blechelement 3.27 beziehungsweise 3.47 mit dem jeweiligen Kolbenelement 20 beziehungsweise 21. Das Aufpressen der beiden verbundenen Blechelemente 2.27 und 3.27 beziehungsweise 2.47 und 3.47 wird mit der Kante 68 beziehungsweise 69 am Kolbenelement 20, 21 begrenzt, die beispielsweise durch die zum zylindrischen Bereich geneigte Ausführung des sich daran anschließenden Bereiches der Kolbenelemente 20, 21 charakterisiert ist.

Die Figuren 4 bis 6 verdeutlichen Ausführungen der Dichtungsträger aus zwei Blechelementen, wodurch über die Dimensionierung und Ausgestaltung von diesem die Dichteinrichtung hinsichtlich einer ihrer Abmessungen frei wählbar ist und zumindest nicht direkt an einen, zur Ausbildung einer Dichtpaarung erforderlichen Flächenbereich an einer die mit Druckmittel beaufschlagbare Kammer begrenzenden Wand gebunden ist. Für die Dichteinrichtung erfolgt der Ausgleich beispielsweise eines größeren Abstandes zwischen den gegeneinander abzudichtenden Elementen - Kolbenelement und eine ortsfeste Wandung der mit Druckmittel beaufschlagbaren Kammer - über den Dichtungsträger. Dies gilt in Analogie auch für die Positionierung der Dichteinrichtung. Diese ist über die Ausgestaltung des Dichtungsträgers variabel.

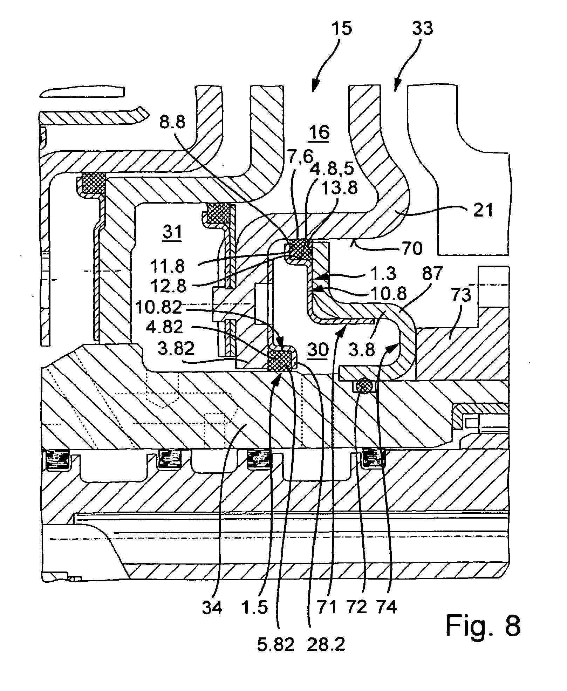

Verdeutlichen die Figuren 4 bis 7 Ausführungen zur Abdichtung der Ausgleichskammern einer Doppelkupplungsausführung 15, zeigen die Figuren 8 bis 10 Möglichkeiten der Ausführung von Dichtungsanordnungen zur Abdichtung der Druckkammern 26, 30.

Die Figur 8 verdeutlicht dabei eine Ausführung der Dichtungsanordnung 1.3 gemäß Figur 3 zur Abdichtung der mit Druckmittel beaufschlagbaren Kammer 30 in Form der Druckkammer. Bei dieser Ausführung wird ein Dichtungsträger 10.8 gewählt, der ebenfalls aus zwei Blechelementen 2.8 und 3.8 besteht, die in ihrem radial äußeren Endbereich eine Nut 4.8 ausbilden, in welcher eine Dichteinrichtung 5 eingelegt wird. Die Dichteinrichtung 5 ist vorzugsweise ebenfalls wiederum als Dichtring ausgeführt und bildet im Bereich ihres Außenumfanges 7 wenigstens über einen Teilbereich dessen eine Dichtfläche 6, die mit einer in radialer Richtung einen Innenumfang ausbildenden Fläche 70 am Kolbenelement 21 eine Dichtpaarung bildet. Die beiden Blechelemente 2.8 und 3.8 sind hier in unterschiedlicher Stärke ausgeführt, wobei das Blechelement 3.8 gleichzeitig die Funktion einer Wandung und damit tragende Funktion mit übernimmt. Das zweite Blechelement 3.8 ist dabei als dickes stabiles Trägerblech ausgebildet, welches die Druckkräfte abstützt. Die Ausformung der nutbildenden Bereiche erfolgt daher am dünnen Blechelement 2.8, indem der Endbereich 8.8 des ersten Blechelementes 2.8 entsprechend gekröpft geformt ist und eine Anlagefläche 12.8 für die Dichteinrichtung in radialer Richtung und 11.8 in axialer Richtung bildet. Die Nut 4.8 wird ferner durch die axiale Anlagefläche 13.8 am Blechelement 3.8 gebildet. Wie bereits ausgeführt, erfolgt vorzugsweise die Ausformung der Nut 4.8 am dünneren Blechelement 2.8. Das stärkere Trägerblech wird vorzugsweise nicht für die Dichteinrichtung 5 umgeformt. Das stärkere Trägerblech bildet ein Gehäuseteil beziehungsweise eine Wandung der Kammer 30 begrenzendes Bauteil 87. Die Verbindung zwischen dem dünneren und dem dickeren Blech 2.8 und 3.8 erfolgt vorzugsweise stoffschlüssig, beispielsweise wird das dünnere Blech 2.8 mittels einer Punktschweißverbindung an dem zweiten Blech 3.8 fixiert. Zur radialen Ausrichtung ist eine Zentrierung 71 vorgesehen, die verschiedenartig ausgeführt sein kann. Im einfachsten Fall ist dazu am Trägerblech 3.8 ein entsprechend in radialer Richtung einen Innenumfang bildender Flächenbereich vorgesehen, der mit einem in radialer Richtung nach außen gerichteten Flächenbereich am Blechelement 2.8 in Wirkverbindung tritt und damit die Lage in radialer Richtung für das zweite Blechelement 2.8 begrenzt. Zur inneren Abdichtung des Trägerbleches kann eine weiter zwischen diesem und der Kolbennabe 34 angeordnete Dichteinrichtung 72 vorgesehen werden. Diese ist vorzugsweise in Form eines O-Ringes ausgeführt, der zwischen der Kolbennabe 34 für das Kolbenelement 21 und einem in radialer Richtung innenliegenden zylindrischen Bereich, das heißt einen Innenumfang bildenden Bereich des Blechelementes 3.8 angeordnet ist. Das Blechelement 3.8 ist dabei im Querschnitt betrachtet vorzugsweise C-förmig mit in radialer Richtung ausgebildetem Ansatz ausgeführt. Das offene Ende des dicken Blechelementes 3.8 dient dabei als Axialanschlag 74 und kann so mit einem Zahnrad 73 fixiert werden.

Zur Abdichtung des Kolbenelementes 21 gegenüber der Kolbennabe 34 ist ferner eine Dichtungsanordnung 1.5 vorgesehen. Diese umfasst einen Dichtungsträger 10.82, welcher ein Blechelement 2.82 umfasst, das mit einem weiteren zweiten Blechelement 3.82 in Form des Kolbenelementes 21 die Nut 4.82 zur Aufnahme einer weiteren Dichteinrichtung 5.82 ausbildet. Die Ausführung erfolgt analog zum Dichtungsträger 10.8.

Die Figuren 9a und 9b verdeutlichen eine Ausführung einer Dichtungsanordnung 1.17 zur Abdichtung der Druckkammer 26 in einem Schnitt direkt durch die Abstützung des Dichtungsträgers 10.17 und durch die Kanalführung in einem Ausschnitt aus Figur 7. Die Dichtungsanordnung 1.17 umfasst hier den Dichtungsträger 10.17 und zwei Dichtungen, eine erste Dichteinrichtung 61 und eine zweite Dichteinrichtung 75, wobei die erste Dichteinrichtung 61 die mit Druckmittel beaufschlagbare Kammer 26 im radial äußeren Bereich abdichtet und die zweite Dichteinrichtung 75 der Abdichtung dem radial inneren Bereich dient. Der Dichtungsträger 10.17 besteht auch hier aus zwei Blechelementen, den Blechelementen 2.17 und 3.17, die beispielhaft mittels Clinchverbindung formschlüssig miteinander verbunden sind. Alternativ wäre auch eine Verbindung mit einer anderen unlösbaren Verbindung, beispielsweise einer stoffschlüssigen Verbindung, beispielsweise Punktschweißen, denkbar. Der Dichtungsträger 10.17 weist einen zylindrischen Bereich 76 auf und einen scheibenförmigen, d.h. in senkrechter Richtung ausgerichteten Bereich in Einbaulage betrachtet auf, wobei der in senkrechter Richtung ausgerichtete Bereich 77 mit seiner zum Kolbenelement 21 gewandten Stirnseite an diesen zumindest in einem Teilbereich anliegt. In diesem Teilbereich, der mit 78 bezeichnet ist, ist die stoffschlüssige Verbindung vorgesehen. Der zylindrische beziehungsweise ringförmige Bereich 76 trägt die Dichteinrichtung 61. In diesem ist die Nut 4.17 ausgebildet. Auch hier sind beide Blechelemente 2.17 und 3.17 an der Ausbildung der Nut 4.7 beteiligt, wobei das kolbenseitige Blechelement 3.17 eine axiale Anlagefläche 13.17 in Einbaulage betrachtet für die Dichteinrichtung 61 bildet, während das andere zweite Blechelement 2.17 eine zur ersten axialen Anlagefläche 13.17 entgegengesetzt ausgerichtete Anlagefläche 11.17 in axialer Richtung ausbildet und ferner eine Anlagefläche 12.17 in radialer Richtung. Dazu weist das erste Blechelement 2.17 einen in radialer Richtung weisenden Bereich auf. Das zweite Blechelement, insbesondere das kolbenseitige Blechelement 3.17, ist im zylindrischen Bereich 76 in radialer Richtung derart angeordnet, dass dieses oberhalb des ersten Blechelementes 2.17 angeordnet ist. Das Blechelement 2.17 liegt quasi am Innenumfang des zylindrischen Bereiches 76 am kolbenseitigen Blechelement 3.17 an. Im Querschnitt betrachtet beschreibt das Blechelement quasi in diesem Bereich zumindest eine L-Form, vorzugsweise erfolgt eine weitestgehende Anpassung an die geometrische Ausführung des Kolbenelementes 21. Das Blechelement 2.17 erstreckt sich dabei lediglich nur im zylindrischen Bereich 76 und über einen Teilbereich der Stirnseite des Blechelementes 3.17. Um die Verformung des geclinchten Dichtungsträgers 10.17 aufgrund des hohen in der mit Druckmittel beaufschlagbaren Kammer 26 vorherrschenden Druckes (maximal 20 bar) zu begrenzen, stützt sich dieser an dem ortsfesten Bauteil 29 ab, welches vom Außenlamellenträger der in radialer Richtung äußeren Kupplung K2 gebildet wird. Dabei sollte der Bereich der Abstützung, der hier mit 78 bezeichnet ist, einen möglichst geringen Abstand zur Dichtkante, das heißt den Dichteinrichtungen 61 aufweisen, um einen möglichst geringen wirksamen Hebelarm zu bilden.

Wird der Leckagepfad, der in Figur 9b mit Pfeil eingezeichnet ist, von der Abdichtung über die Dichteinrichtung 61 und die entsprechenden Anschlagsfläche am Blechelement 3.17 behindert, ist keine zusätzliche Abdichtung zwischen den Blechelementen 2.17 und 3.17 nötig. Ist dies nicht der Fall, ist die Clinchverbindung druckdicht auszuführen. Die zweite Dichteinrichtung 75 ist zwischen der Kolbennabe 34 beziehungsweise der Hohlwelle und dem kolbenseitigen Blechelement 3.17 angeordnet. Diese übernimmt die innere Abdichtung der Druckkammer 26. Vorteilhaft ist das Blech 3.17 in diesem Bereich mit einer Schräge 79 ausgebildet, so dass hier ein größerer Dichtbereich zwischen der Dichteinrichtung 75 und dem Blechelement 3.17 erzeugt wird. Die radiale Fixierung des Dichtungsträgers 10.17 übernimmt der am Innenumfang ausgebildete zylindrische Bereich, das heißt ein sich in axialer Richtung ausstreckender Bereich 80, der einen Innenumfang beschreibenden Flächenbereich ausbildet, der mit der Kolbennabe 34 beziehungsweise der Hohlwelle zusammenwirkt beziehungsweise auf diese aufgefügt ist, vorzugsweise beispielsweise durch eine Pressverbindung. Die axiale Abstützung des Dichtungsträgers 10.17 am Außenlamellenträger ist zur Ausbildung einer Verbindung zwischen der Ausgleichskammer 27 über die Überlaufbohrung 81 zum restlichen Kupplungsraum partiell unterbrochen. Dies dient der Entlüftung beim Befüllen der als Ausgleichskammer fungierenden Kammer 27 für die äußere Kupplung und als Überlauf analog wie in der Figur 4 beschrieben.

Die Überlauffunktion ist im Detail in der Figur 9b dargestellt. Die Figur 9b beinhaltet einen Schnitt gemäß der Figur 9a, allerdings nicht durch die Abstützung, sondern durch die von der Abstützung freien Bereiche. Daraus ist ersichtlich, dass hier ein Überlauf 81 gewährleistet ist.

Die Figur 10 verdeutlicht eine Ausführung zur Abdichtung der äußeren Druckkammer, insbesondere der mit Druckmittel beaufschlagbaren Kammer 30 gemäß Figur 7. Auch hier ist der Dichtungsträger 10.37 als zweiteiliger Dichtungsträger aus zwei Blechelementen gefertigt, den Blechelementen 3.37 und 2.37. Diese sind vorzugsweise mittels einer Clinchverbindung formschlüssig miteinander verbunden. Andere Möglichkeiten sind ebenfalls denkbar. Aufgrund der vorherrschenden Drücke in der mit Druckmittel beaufschlagbaren Kammer 30 und die dadurch bedingten Druckkräfte wird die Gesamtsteifigkeit der Blechelemente 2.37 und 3.37 und auch deren Zusammenfügung zu einer Baueinheit, ganz besonders im Dichtungsträger 10.37, reduziert. Die Dichtungsanordnung 1.37 umfasst hier eine Dichteinrichtung 61, die in der Nut 4.7 zwischen den beiden Blechelementen 2.37 und 3.37 angeordnet ist, wobei die beiden Blechelemente vorzugsweise sich über ihre gesamte Erstreckung vom Außen- zum Innenumfang gemeinsam unter Ausbildung zweier in radialer Richtung versetzt zueinander angeordneter zylindrischer Bereiche 82 und 84, die über einen in radialer Richtung ausgerichteten Verbindungsbereich 83 verbunden sind, erstrecken und einen Verbund bilden und somit zu einer verstärkten Blecheinheit zusammengefügt sind. Die Nut 4.7 wird dabei zwischen dem ersten Blechelement 2.37 und dem zweiten Blechelement 3.37 ausgebildet. Für die Ausbildung der Nut 4.7 kann auf die Ausführungen in Figur 9a verwiesen werden.

Die Blecheinheit in Form des Dichtungsträgers 10.37 ist hier im Querschnitt betrachtet im wesentlichen Z-förmig ausgebildet, wobei der radial äußere zylindrische Bereich 82 die Nut 4.7 ausbildet, während der radial innere Bereich 84 ebenfalls als Dichtfläche 85 fungiert. Die Dichteinrichtung 86 dient dabei der Abdichtung des Druckraumes 30. Diese ist zwischen dem Dichtungsträger 10.37, welcher gleichzeitig den Druckraum 30 begrenzt, und dem Kolbenelement 21 angeordnet. Die radial innenliegende Dichteinrichtung 86 ist zwischen einem einen Innenumfang ausbildenden Bereich des Dichtungsträgers 10.37 und der Kolbennabe 34 angeordnet. Die Dichteinrichtung 86 ist vorzugsweise als O-Ring ausgeführt. Diese ist in einer Nut 88 in der Kolbennabe integriert.

Wird der Leckagepfad zwischen den einzelnen Blechelementen 2.37 und 3.37 mindestens an einer der Dichtkanten, die an den Anlageflächen der Dichteinrichtung gebildet werden, verhindert, sind keine weiteren Abdichtmaßnahmen zwischen den Blechen 2.37 und 3.37 nötig. Ist die Dichtwirkung nicht ausreichend, übernimmt die Clinchverbindung zwischen den Blechelementen 2.37 und 3.37 das Abdichten zwischen den beiden Blechen. Zur Begrenzung des Luftweges des Kolbens dient ein integrierter Anschlag 89, welcher vorteilhaft aus Kunststoff gefertigt ist.

Die Figuren 4 bis 10 beschreiben beispielhaft vorteilhafte Ausführungen der erfindungsgemäßen Dichtungsanordnung, insbesondere des Dichtungsträgers in einer auslaufenden Doppelkupplung für die Abdichtung der einzelnen der Aktorik zugeordneten druckmittelbeaufschlagbaren Kammern, insbesondere Druckkammern und Ausgleichskammern. Die dargestellten Ausführungen sind beispielhaft und stellen gleichwohl vorteilhafte Ausgestaltungen dar. Andere Ausführungen und Abweichungen, insbesondere in der geometrischen Ausgestaltung des Dichtungsträgers im Querschnitt betrachtet, bestehen in einer Vielzahl von Möglichkeiten, auf die hier alle im einzelnen nicht eingegangen werden kann, die jedoch im Ermessen des zuständigen Fachmannes liegen, insbesondere durch Vorgabe der Platzverhältnisse und der erforderlichen Funktionen.

### Bezugszeichenliste

- 1,1.1b, 1.1, 1.2, 1.3, 1.4, 1.5,:
- 1.25, 1.17, 1.27, 1.27, 1.47: Dichtungsanordnung
- 2, 2.4, 2.5, 2.6, 2.17, 2.27, 2.37,:
- 2.47, 2.8, 2.82: erstes Blechelement
- 3, 3,1 b, 3.4, 3.5, 3.6, 3.17, 3.27,:
- 3.37, 3.47, 3.8, 3.82: zweites Blechelement
- 4, 4.1 b, 4.4, 4.5, 4.6, 4.7, 4.827,:
- 4.37, 4.47, 4.8, 4.82: Nut
- 5, 5.82: Dichtung
- 5.1, 5.2: Dichtfläche
- 6: Dichtfläche
- 7: Außenumfang
- 8, 8.4, 8.5, 8.6, 8.17, 8.27, 8.37, 8.47,8.8: Endbereich
- 9, 9.1 b, 9.4, 9.5, 9.6, 9.17, 9.27, 9.37, 9.47, 9.8: Endbereich
- 10, 10.4, 10.41, 10.5, 10.6, 10.17,:
- 10.27, 10.37, 10.47, 10.8, 10.82: Dichtungsträger
- 11, 11.4, 11.5, 11.6, 11.17, 11.27,:
- 11.37, 11.47, 11.8: Anlagefläche
- 12, 12.4, 12.5, 12.6, 12.17,12.27,:
- 12.37, 12.47, 12.8: Anlagefläche
- 13, 13.4, 13.5, 13.6, 13.17, 13.27,:
- 13.37, 13.47, 13.8: Anlagefläche
- 14, 14.4, 14.5, 14.6, 14.17,14.27,:
- 14.37, 14.47, 14.8: Anlagefläche
- 15: nasslaufende Doppelkupplungsanordnung
- 16: Innenraum
- 17: Gehäuseteil
- 18: Stelleinrichtung
- 19: Stelleinrichtung
- 20: Kolbenelement
- 20.1, 20.2: Stirnseite
- 21: Kolbenelement
- 21.1, 21.2: Stirnseite
- 22: erster Kupplungsteil
- 23: zweiter Kupplungsteil
- 24: erster Kupplungsteil
- 25: zweiter Kupplungsteil
- 26: mit Druckmittel beaufschlagbare Kammer
- 27: mit Druckmittel beaufschlagbare Kammer
- 28.1, 28.2, 28.3, 28.4: Dichteinrichtung
- 29: Gehäuseteil
- 30: mit Druckmittel beaufschlagbare Kammer
- 31: mit Druckmittel beaufschlagbare Kammer
- 32: Innenumfang der Dichtung
- 33: Stelleinheit
- 34: Kolbennabe
- 35: Kupplungsgehäuse
- 36: Bauteil
- 37: Bauteil
- 38: Bauteil
- 39: Gehäusewand
- 40: Anschluss
- 41: Anschluss
- 42: Anschluss
- 43: Anschluss
- 44: Dichteinrichtung
- 44.1, 44.2: Stirnseite, Dichtfläche
- 45: Dichteinrichtung
- 46: Außenumfang
- 47: Stirnfläche
- 48: Stirnfläche
- 49: Nut
- 50: Innenumfang
- 51: radial innerer Endbereich
- 52: Dichtfläche
- 53: Niet
- 54: Fläche
- 55: Dichtkante
- 56: Dichtkante
- 57: Rücksprung
- 58: Rücksprung
- 59: Nietschaft
- 60: Überlauf
- 61: Dichtungseinrichtung
- 62: Clinchverbindung
- 63: Teilbereich
- 64: Teilbereich
- 65: zylindrischer Bereich
- 66: Sicke
- 67: Sicke
- 68: Kante
- 69: Kante
- 70: Fläche
- 71: Zentrierung
- 72: Dichteinrichtung
- 73: Zahnrad
- 74: Anschlag
- 75: Dichteinrichtung
- 76: Bereich
- 77: Bereich
- 78: Teilbereich
- 79: Schräge
- 80: Bereich
- 81: Überlauf
- 82: zylindrischer Bereich
- 83: Bereich
- 84: zylindrischer Bereich
- 85: Dichtfläche
- 86: Dichteinrichtung
- 87: Element
- 88: Nut
- 89: Anschlag
- D: Dicke
- t: N uttiefe
- d₅₅: Durchmesser
- d₅₆: Durchmesser
- K1: erste Kupplungseinrichtung
- K2: zweite Kupplungseinrichtung
- E: Eingang
- A: Ausgang
- R: Rotationsachse
- M: Mittenachse

## Patentansprüche

1. Dichtungsanordnung (1, 1.1, 1.1b, 1.2, 1.3, 1.4, 1.5, 1.17, 1.27, 1.37, 1.47) für eine druckmittelbetätigbare Stelleinrichtung (18, 19) in einer Kupplungsanordnung (15) zur Abdichtung einer dieser zugeordneten mit Druckmittel beaufschlagbaren Kammer (26, 27, 30, 31), umfassend zumindest eine elastische Dichteinrichtung (5, 5.82, 44, 61) und einen Dichtungsträger (10, 10.1b, 10.4, 10.5, 10.6, 10.17, 10.27, 10.37, 10.47, 10.8, 10.82), **dadurch gekennzeichnet, dass** die Dichteinrichtung (5, 5.82, 44, 61) in dem Dichtungsträger (10, 10.1b, 10.4, 10.5, 10.6, 10.17, 10.27, 10.37, 10.47, 10.8, 10.82), umfassend zwei separate eine Nut (4, 4.1b, 4.4, 4.5, 4.6, 4.7, 4.8, 4.82) zur Aufnahme der Dichteinrichtung (5, 5.82, 44, 61) bildende Blechelemente (2, 2.4, 2.5, 2.6, 2.17, 2.27, 2.37, 2.47, 2.8, 2.82, 3, 3.1b, 3.4, 3.5, 3.6, 3.17, 3.27, 3.37, 3.47, 3.8, 3.82) geführt ist, wobei zumindest ein Blechelement (2, 2.4, 2.5, 2.6, 2.17, 2.27, 2.37, 2.47, 2.8, 2.82, 3, 3.1b, 3.4, 3.5, 3.6, 3.17, 3.27, 3.37, 3.47, 3.8, 3.82) an einem, die mit Druckmittel beaufschlagbare Kammer (26, 27, 30, 31) begrenzenden Element (20, 21, 17, 36, 29, 37, 87) befestigt ist, wobei das Blechelement eine axiale und radiale Anlagefläche zur Abstützung der Dichteinrichtung bildet.

2. Dichtungsanordnung (1, 1.1, 1.1b, 1.2, 1.3, 1.4, 1.5, 1.17, 1.27, 1.37, 1.47) nach Anspruch 1, **dadurch gekennzeichnet, dass** das die mit Druckmittel beaufschlagbare Kammer (26, 27, 30, 31) begrenzende Element (20, 21, 17, 36, 29, 37, 87) von der Stelleinrichtung (18, 19) oder einer Gehäusewandung (17, 29) gebildet wird.

3. Dichtungsanordnung (1.1, 1.3, 1.5) nach Anspruch 1 oder 2, **dadurch gekennzeichnet, dass** eines der beiden Blechelemente (3.8, 3.82) von der Stelleinrichtung (18, 19, 20, 21) oder einem anderen, die mit Druckmittel beaufschlagbare Kammer (26, 27, 30, 31) begrenzenden Element (20, 21, 17, 36, 29, 37, 87) gebildet wird.

4. Dichtungsanordnung (1.1, 1.3, 1.5) nach Anspruch 3, **dadurch gekennzeichnet, dass** zumindest zwei die Nut (4, 4.8, 4.82) bildende Anlageflächen (11.8, 12.8) am mit dem, die mit Druckmittel beaufschlagbare Kammer (30) begrenzenden Element (21, 87) verbundenen Blechelement (3.8, 3.82) ausgeformt sind und das, die mit Druckmittel beaufschlagbare Kammer (30) begrenzende Element (21, 87) nur eine radiale oder axiale Anlagefläche (13.8) der Nut (4, 4.8, 4.82) für die Dichteinrichtung (5, 5.82) ausbildet.

5. Dichtungsanordnung (1, 1.1, 1.1 b, 1.2, 1.3, 1.4, 1.5, 1.17, 1.27, 1.37, 1.47) nach Anspruch 1 oder 2, **dadurch gekennzeichnet, dass** die zwei Blechelemente (2, 2.4, 2.5, 2.6, 2.17, 2.27, 2.37, 2.47, 3, 3.1b, 3.4, 3.5, 3.6, 3.17, 3.27, 3.37, 3.47) am, die mit Druckmittel beaufschlagbare Kammer (26, 27, 30, 31) begrenzenden Element (20, 21, 17, 36, 29, 37, 87) befestigt sind.

6. Dichtungsanordnung (1, 1.1, 1.1b, 1.2, 1.3, 1.4, 1.5, 1.17, 1.27, 1.37, 1.47) nach Anspruch 5, **dadurch gekennzeichnet, dass** eine der Abmessungen beziehungsweise Dimensionierung der Dichteinrichtung, insbesondere der Innenumfang der im Dichtungsträger (10, 10.1b, 10.4, 10.5, 10.6, 10.17, 10.27, 10.37, 10.47) geführten Dichteinrichtung (5, 5.82, 44, 61) unabhängig von der Geometrie und /oder Dimensionierung an dem die mit Druckmittel beaufschlagbare Kammer (26, 27, 30, 31) begrenzenden Element (20, 21, 17, 36, 29, 37, 87) wählbar ist, an welchem auch der Dichtungsträger befestigt ist.

7. Dichtungsanordnung (1, 1.1, 1.1 b, 1.2, 1.3, 1.4, 1.5, 1.17, 1.27, 1.37, 1.47) nach Anspruch 5 oder 6, **dadurch gekennzeichnet, dass** zumindest zwei die Nut (4, 4.1 b, 4.4, 4.5, 4.6, 4.7) bildende Anlageflächen (11, 11.4, 11.5, 11.6, 11.17, 11.27, 11.37, 11.47, 12, 12.4, 12.5, 12.6, 12.17, 12.27, 12.37, 12.4, 13, 13.4, 13.5, 13.6, 13.17, 13.27, 13.37, 13.47, 14, 14.4, 14.5, 14.6, 14.17, 14.27, 14.37, 14.47) an einem Blechelement (2, 2.4, 2.5, 2.6, 2.17, 2.27, 2.37, 2.47, 2.8, 2.82, 3, 3.1b, 3.4, 3.5, 3.6, 3.17, 3.27, 3.37, 3.47, 3.8, 3.82) ausgebildet sind, während das andere Blechelement (3, 3.1 b, 3.4, 3.5, 3.6, 3.17, 3.27, 3.37, 3.47, 3.8, 3.82, 2, 2.4, 2.5, 2.6, 2.17, 2.27, 2.37, 2.47, 2.8, 2.82) nur eine Anlagefläche (13, 13.4, 13.5, 13.6, 13.17, 13.27, 13.37, 13.47, 11, 11.4, 11.5, 11.6, 11.17, 11.27, 11.37, 11.47) bildet.

8. Dichtungsanordnung (1, 1.1, 1.1 b, 1.2, 1.3, 1.4, 1.5, 1.17, 1.27, 1.37, 1.47) nach Anspruch 5 oder 6, **dadurch gekennzeichnet, dass** an jedem Blechelement (2, 2.4, 2.5, 2.6, 2.17, 2.27, 2.37, 2.47, 2.8, 2.82, 3, 3.1b, 3.4, 3.5, 3.6, 3.17, 3.27, 3.37, 3.47, 3.8, 3.82) zumindest Teilbereiche von wenigstens zwei, die Nut (4, 4.1b, 4.4, 4.5, 4.6, 4.7) beschreibenden Anlageflächen (11, 11.4, 11.5, 11.6, 11.17, 11.27, 11.37, 11.47, 12, 12.4, 12.5, 12.6, 12.17, 12.27, 12.37, 12.4, 13, 13.4, 13.5, 13.6, 13.17, 13.27, 13.37, 13.47, 14, 14.4, 14.5, 14.6, 14.17, 14.27, 14.37, 14.47) für die Dichteinrichtung (5, 44, 61) ausgebildet sind.

9. Dichtungsanordnung (1, 1.1, 1.1b, 1.2, 1.3, 1.4, 1.5, 1.17, 1.27, 1.37, 1.47) nach einem der Ansprüche 1 bis 8, **dadurch gekennzeichnet, dass** die Verbindung zwischen dem oder den Blechelementen (2, 2.4, 2.5, 2.6, 2.17, 2.27, 2.37, 2.47, 2.8, 2.82, 3, 3.1b, 3.4, 3.5, 3.6, 3.17, 3.27, 3.37, 3.47, 3.8, 3.82) und dem, die mit Druckmittel beaufschlagbare Kammer (26, 27, 30, 31) begrenzenden Element (20, 21, 17, 36, 29, 37, 87) formschlüssig als eine Nietverbindung ausgebildet ist, wobei die Vernietung mittels separater Nieten erfolgt oder mittels aus dem Anschlusselement extrudierten Nieten (53).

10. Doppelkupplungsanordnung, insbesondere nasslaufende Doppelkupplungsanordnung (15) mit einem Eingang (E) und zwei Ausgängen (A) und jeweils einer zwischen dem Eingang und einem der Ausgänge koaxial zueinander angeordneten ersten Kupplungseinrichtung (K1) und einer zweiten Kupplungseinrichtung (K2), wobei jede Kupplungseinrichtung (K1, K2) eine Stelleinrichtung (18, 19) aufweist, welche ein Kolbenelement (20, 21) umfasst und zumindest eine, diesem zugeordnete mit Druckmittel beaufschlagbare Kammer (26, 27, 30, 31), wobei die mit Druckmittel beaufschlagbare Kammer (26, 27, 30, 31) gegenüber dem übrigen Innenraum (16) der Doppelkupplungsanordnung (15) abgedichtet ist, **dadurch gekennzeichnet, dass** die Abdichtung wenigstens einer einzelnen, mit Druckmittel beaufschlagbaren Kammer (26, 27, 30, 31) mittels wenigstens einer Dichtungsanordnung (1, 1.1, 1.1b, 1.2, 1.3, 1.4, 1.5, 1.17, 1.27, 1.37, 1.47) gemäß einem der Ansprüche 1 bis 9 ausgeführt ist.

11. Doppelkupplungsanordnung (15) nach Anspruch 10, **dadurch gekennzeichnet, dass** dem Kolbenelement (20) der ersten Kupplungseinrichtung (K1) eine als Druckkammer fungierende, mit Druckmittel beaufschlagbare Kammer (26) zugeordnet ist, und eine Dichtungsanordnung (1, 1.1, 1.1b, 1.2, 1.3, 1.4, 1.5, 1.17) zwischen dem Kolbenelement (20) und einer, die Kammer (26) begrenzende Gehäusewandung (29) angeordnet ist.

12. Doppelkupplungsanordnung (15) nach einem der Ansprüche 10 oder 11, **dadurch gekennzeichnet, dass** dem Kolbenelement (20) der ersten Kupplungseinrichtung (K1) eine als Ausgleichskammer fungierende, mit Druckmittel beaufschlagbare Kammer (27) zugeordnet ist, und eine Dichtungsanordnung (1, 1.2, 1.3, 1.4, 1.5, 1.27) zwischen dem Kolbenelement (20) und einer, die Kammer (27) begrenzende Gehäusewandung (17) angeordnet ist.

13. Doppelkupplungsanordnung (15) nach einem der Ansprüche 10 bis 12, **dadurch gekennzeichnet, dass** dem Kolbenelement (21) der zweiten Kupplungseinrichtung (K2) eine als Druckkammer fungierende, mit Druckmittel beaufschlagbare Kammer (30) zugeordnet ist, und eine Dichtungsanordnung (1, 1.3, 1.37, 1.5) zwischen dem Kolbenelement (20) und einer, die Kammer (26) begrenzende Gehäusewandung (87, 34) angeordnet ist.

14. Doppelkupplungsanordnung (15) nach Anspruch 10 bis 13, **dadurch gekennzeichnet, dass** dem Kolbenelement (21) der zweiten Kupplungseinrichtung (K2) eine als Ausgleichskammer fungierende, mit Druckmittel beaufschlagbare Kammer (31) zugeordnet ist, und eine Dichtungsanordnung (1, 1.4, 1.47) zwischen dem Kolbenelement (21) und einer, die Kammer (30) begrenzende Gehäusewandung (29) angeordnet ist.

## Claims

1. Sealing assembly (1, 1.1, 1.1b, 1.2, 1.3, 1.4, 1.5, 1.17, 1.27, 1.37, 1.47) for a pressure-medium-actuable operating device (18, 19) in a clutch arrangement (15) for sealing off a chamber (26, 27, 30, 31) assigned to the latter and loadable with pressure medium, comprising at least one elastic sealing device (5, 5.82, 44, 61) and one seal carrier (10, 10.1b, 10.4, 10.5, 10.6, 10.17, 10.27, 10.37, 10.47, 10.8, 10.82), **characterized in that** the sealing device (5, 5.82, 44, 61) is guided in the seal carrier (10, 10.1b, 10.4, 10.5, 10.6, 10.17, 10.27, 10.37, 10.47, 10.8, 10.82), comprising two separate sheet metal elements (2, 2.4, 2.5, 2.6, 2.17, 2.27, 2.37, 2.47, 2.8, 2.82, 3, 3.1b, 3.4, 3.5, 3.6, 3.17, 3.27, 3.37, 3.47, 3.8, 3.82) forming a groove (4, 4.1b, 4.4, 4.5, 4.6, 4.7, 4.8, 4.82) for receiving the sealing device (5, 5.82, 44, 61), at least one sheet metal element (2, 2.4, 2.5, 2.6, 2.17, 2.27, 2.37, 2.47, 2.8, 2.82, 3, 3.1b, 3.4, 3.5, 3.6, 3.17, 3.27, 3.37, 3.47, 3.8, 3.82) being fastened to an element (20, 21, 17, 36, 29, 37, 87) delimiting the chamber (26, 27, 30, 31) loadable with pressure medium, the sheet metal element forming an axial and radial bearing surface for supporting the sealing device.

2. Sealing assembly (1, 1.1, 1.1b, 1.2, 1.3, 1.4, 1.5, 1.17, 1.27, 1.37, 1.47) according to Claim 1, **characterized in that** the element (20, 21, 17, 36, 29, 37, 87) delimiting the chamber (26, 27, 30, 31) loadable with pressure medium is formed by the operating device (18, 19) or by a housing wall (17, 29).

3. Sealing assembly (1.1, 1.3, 1.5) according to Claim 1 or 2, **characterized in that** one of the two sheet metal elements (3.8, 3.82) is formed by the operating device (18, 19, 20, 21) or by another element (20, 21, 17, 36, 29, 37, 87) delimiting the chamber (26, 27, 30, 31) loadable with pressure medium.

4. Sealing assembly (1.1, 1.3, 1.5) according to Claim 3, **characterized in that** at least two bearing surfaces (11.8, 12.8) forming the groove (4, 4.8, 4.82) are shaped out on the sheet metal element (3.8, 3.82) connected to the element (21, 87) delimiting the chamber (30) loadable with pressure medium, and the element (21, 87) delimiting the chamber (30) loadable with pressure medium forms only one radial or axial bearing surface (13.8) of the groove (4, 4.8, 4.82) for the sealing device (5, 5.82).

5. Sealing assembly (1, 1.1, 1.1b, 1.2, 1.3, 1.4, 1.5, 1.17, 1.27, 1.37, 1.47) according to Claim 1 or 2, **characterized in that** the two sheet metal elements (2, 2.4, 2.5, 2.6, 2.17, 2.27, 2.37, 2.47, 3, 3.1b, 3.4, 3.5, 3.6, 3.17, 3.27, 3.37, 3.47) are fastened to the element (20, 21, 17, 36, 29, 37, 87) delimiting the chamber (26, 27, 30, 31) loadable with pressure medium.

6. Sealing assembly (1, 1.1, 1.1b, 1.2, 1.3, 1.4, 1.5, 1.17, 1.27, 1.37, 1.47) according to Claim 5, **characterized in that** one of the dimensions or the dimensioning of the sealing device, in particular the inner circumference of the sealing device (5, 5.82, 44, 61) guided in the seal carrier (10, 10.1b, 10.4, 10.5, 10.6, 10.17, 10.27, 10.37, 10.47), is selectable independently of the geometry and/or dimensioning on the element (20, 21, 17, 36, 29, 37, 87) which delimits the chamber (26, 27, 30, 31) loadable with pressure medium and to which the seal carrier is also fastened.

7. Sealing assembly (1, 1.1, 1.1b, 1.2, 1.3, 1.4, 1.5, 1.17, 1.27, 1.37, 1.47) according to Claim 5 or 6, **characterized in that** at least two bearing surfaces (11, 11.4, 11.5, 11.6, 11.17, 11.27, 11.37, 11.47, 12, 12.4, 12.5, 12.6, 12.17, 12.27, 12.37, 12.4, 13, 13.4, 13.5, 13.6, 13.17, 13.27, 13.37, 13.47, 14, 14.4, 14.5, 14.6, 14.17, 14.27, 14.37, 14.47) forming the groove (4, 4.1b, 4.4, 4.5, 4.6, 4.7) are formed on one sheet metal element (2, 2.4, 2.5, 2.6, 2.17, 2.27, 2.37, 2.47, 2.8, 2.82, 3, 3.1b, 3.4, 3.5, 3.6, 3.17, 3.27, 3.37, 3.47, 3.8, 3.82), while the other sheet metal element (3, 3.1b, 3.4, 3.5, 3.6, 3.17, 3.27, 3.37, 3.47, 3.8, 3.82, 2, 2.4, 2.5, 2.6, 2.17, 2.27, 2.37, 2.47, 2.8, 2.82) forms only one bearing surface (13, 13.4, 13.5, 13.6, 13.17, 13.27, 13.37, 13.47, 11, 11.4, 11.5, 11.6, 11.17, 11.27, 11.37, 11.47).

8. Sealing assembly (1, 1.1, 1.1b, 1.2, 1.3, 1.4, 1.5, 1.17, 1.27, 1.37, 1.47) according to Claim 5 or 6, **characterized in that** at least some regions of at least two bearing surfaces (11, 11.4, 11.5, 11.6, 11.17, 11.27, 11.37, 11.47, 12, 12.4, 12.5, 12.6, 12.17, 12.27, 12.37, 12.4, 13, 13.4, 13.5, 13.6, 13.17, 13.27, 13.37, 13.47, 14, 14.4, 14.5, 14.6, 14.17, 14.27, 14.37, 14.47) describing the groove (4, 4.1b, 4.4, 4.5, 4.6, 4.7) for the sealing device (5, 44, 61) are formed on each sheet metal element (2, 2.4, 2.5, 2.6, 2.17, 2.27, 2.37, 2.47, 2.8, 2.82, 3, 3.1b, 3.4, 3.5, 3.6, 3.17, 3.27, 3.37, 3.47, 3.8, 3.82).

9. Sealing assembly (1, 1.1, 1.1b, 1.2, 1.3, 1.4, 1.5, 1.17, 1.27, 1.37, 1.47) according to one of Claims 1 to 8, **characterized in that** the connection between the sheet metal element or sheet metal elements (2, 2.4, 2.5, 2.6, 2.17, 2.27, 2.37, 2.47, 2.8, 2.82, 3, 3.1b, 3.4, 3.5, 3.6, 3.17, 3.27, 3.37, 3.47, 3.8, 3.82) and the element (20, 21, 17, 36, 29, 37, 87) delimiting the chamber (26, 27, 30, 31) loadable with pressure medium is designed with a form fit as a rivet joint, riveting taking place by means of separate rivets or by means of rivets (53) extruded out of the connection element.

10. Dual clutch arrangement, in particular wet-running dual clutch arrangement (15) with an input (E) and two outputs (A) and in each case a clutch device (K1) and a second clutch device (K2) which are arranged coaxially to one another between the input and one of the outputs, each clutch device (K1, K2) having an operating device (18, 19) which comprises a piston element (20, 21) and at least one chamber (26, 27, 30, 31) assigned to the latter and loadable with pressure medium, the chamber (26, 27, 30, 31) loadable with pressure medium being sealed off with respect to the remaining inner space (16) of the dual clutch arrangement (15), **characterized in that** the sealing-off of at least one individual chamber (26, 27, 30, 31) loadable with pressure medium is executed by means of at least one sealing assembly (1, 1.1, 1.1b, 1.2, 1.3, 1.4, 1.5, 1.17, 1.27, 1.37, 1.47) according to one of Claims 1 to 9.

11. Dual clutch arrangement (15) according to Claim 10, **characterized in that** the piston element (20) of the first clutch device (K1) is assigned a chamber (26) functioning as a pressure chamber and loadable with pressure medium, and a sealing assembly (1, 1.1, 1.1b, 1.2, 1.3, 1.4, 1.5, 1.17) is arranged between the piston element (20) and a housing wall (29) delimiting the chamber (26).

12. Dual clutch arrangement (15) according to either one of Claims 10 and 11, **characterized in that** the piston element (20) of the first clutch device (K1) is assigned a chamber (27) functioning as a compensating chamber and loadable with pressure medium, and a sealing assembly (1, 1.2, 1.3, 1.4, 1.5, 1.27) is arranged between the piston element (20) and a housing wall (17) delimiting the chamber (27).

13. Dual clutch arrangement (15) according to one of Claims 10 to 12, **characterized in that** the piston element (21) of the second clutch device (K2) is assigned a chamber (30) functioning as a pressure chamber and loadable with pressure medium, and a sealing assembly (1, 1.3, 1.37, 1.5) is arranged between the piston element (20) and a housing wall (87, 34) delimiting the chamber (26).

14. Dual clutch arrangement (15) according to Claims 10 to 13, **characterized in that** the piston element (21) of the second clutch device (K2) is assigned a chamber (31) functioning as a compensating chamber and loadable with pressure medium, and a sealing assembly (1, 1.4, 1.47) is arranged between the piston element (21) and a housing wall (29) delimiting the chamber (30).

## Revendications

1. Agencement d'étanchéité (1, 1.1, 1.1b, 1.2, 1.3, 1.4, 1.5, 1.17, 1.27, 1.37, 1.47) pour un dispositif de commande (18, 19) pouvant être actionné par un fluide sous pression dans un agencement d'embrayage (15) pour réaliser l'étanchéité d'une chambre (26, 27, 30, 31) associée à celui-ci et pouvant être sollicitée par un fluide sous pression, comprenant au moins un dispositif d'étanchéité élastique (5, 5.82, 44, 61) et un support d'étanchéité (10, 10.1b, 10.4, 10.5, 10.6, 10.17, 10.27, 10.37, 10.47, 10.8, 10.82), **caractérisé en ce que** le dispositif d'étanchéité (5, 5.82, 44, 61) est guidé dans le support d'étanchéité (10, 10.1b, 10.4, 10.5, 10.6, 10.17, 10.27, 10.37, 10.47, 10.8, 10.82), comprenant deux éléments en tôle séparés (2, 2.4, 2.5, 2.6, 2.17, 2.27, 2.37, 2.47, 2.8, 2.82, 3, 3.1b, 3.4, 3.5, 3.6, 3.17, 3.27, 3.37, 3.47, 3.8, 3.82) formant une rainure (4, 4.1b, 4.4, 4.5, 4.6, 4.7, 4.8, 4.82) pour recevoir le dispositif d'étanchéité (5, 5.82, 44, 61), au moins un élément en tôle (2, 2.4, 2.5, 2.6, 2.17, 2.27, 2.37, 2.47, 2.8, 2.82, 3, 3.1b, 3.4, 3.5, 3.6, 3.17, 3.27, 3.37, 3.47, 3.8, 3.82) étant fixé à un élément adjacent (20, 21, 17, 36, 29, 37, 87) délimitant la chambre (26, 27, 30, 31) pouvant être sollicitée par un fluide sous pression, l'élément en tôle formant une surface d'appui axiale et radiale pour supporter le dispositif d'étanchéité.

2. Agencement d'étanchéité (1, 1.1, 1.1b, 1.2, 1.3, 1.4, 1.5, 1.17, 1.27, 1.37, 1.47) selon la revendication 1, **caractérisé en ce que** l'élément (20, 21, 17, 36, 29, 37, 87) délimitant la chambre (26, 27, 30, 31) pouvant être sollicitée par un fluide sous pression est formé par le dispositif de commande (18, 19) ou par une paroi du boîtier (17, 29).

3. Agencement d'étanchéité (1.1, 1.3, 1.5) selon la revendication 1 ou 2, **caractérisé en ce que** l'un des deux éléments en tôle (3.8, 3.82) est formé par le dispositif de commande (18, 19, 20, 21) ou par un autre élément (20, 21, 17, 36, 29, 37, 87) délimitant la chambre (26, 27, 30, 31) pouvant être sollicitée par un fluide sous pression.

4. Agencement d'étanchéité (1.1, 1.3, 1.5) selon la revendication 3, **caractérisé en ce qu'**au moins deux surfaces d'appui (11.8, 12.8) formant la rainure (4, 4.8, 4.82) sont façonnées sur l'élément en tôle (3.8, 3.82) connecté à l'élément (21, 87) délimitant la chambre (30) pouvant être sollicitée par un fluide sous pression, et l'élément (21, 87) délimitant la chambre (30) pouvant être sollicitée par un fluide sous pression ne constitue qu'une surface d'appui radiale ou axiale (13.8) de la rainure (4, 4.8, 4.82) pour le dispositif d'étanchéité (5, 5.82).

5. Agencement d'étanchéité (1, 1.1, 1.1b, 1.2, 1.3, 1.4, 1.5, 1.17, 1.27, 1.37, 1.47) selon la revendication 1 ou 2, **caractérisé en ce que** les deux éléments (2, 2.4, 2.5, 2.6, 2.17, 2.27, 2.37, 2.47, 3, 3.1b, 3.4, 3.5, 3.6, 3.17, 3.27, 3.37, 3.47) sont fixés sur l'élément (20, 21, 17, 36, 29, 37, 87) délimitant la chambre (26, 27, 30, 31) pouvant être sollicitée par un fluide sous pression.

6. Agencement d'étanchéité (1, 1.1, 1.1b, 1.2, 1.3, 1.4, 1.5, 1.17, 1.27, 1.37, 1.47) selon la revendication 5, **caractérisé en ce que** l'une des dimensions ou le dimensionnement du dispositif d'étanchéité, notamment la périphérie interne du dispositif d'étanchéité (5, 5.82, 44, 61) guidé dans le support d'étanchéité (10, 10.1b, 10.4, 10.5, 10.6, 10.17, 10.27, 10.37, 10.47), peut être sélectionné(e) indépendamment de la géométrie et/ou du dimensionnement sur l'élément (20, 21, 17, 36, 29, 37, 87) délimitant la chambre (26, 27, 30, 31) pouvant être sollicitée par un fluide sous pression, sur lequel élément est également fixé le support d'étanchéité.

7. Agencement d'étanchéité (1, 1.1, 1.1b, 1.2, 1.3, 1.4, 1.5, 1.17, 1.27, 1.37, 1.47) selon la revendication 5 ou 6, **caractérisé en ce qu'**au moins deux surfaces d'appui (11, 11.4, 11.5, 11.6, 11.17, 11.27, 11.37, 11.47, 12, 12.4, 12.5, 12.6, 12.17, 12.27, 12.37, 12.4, 13, 13.4, 13.5, 13.6, 13.17, 13.27, 13.37, 13.47, 14, 14.4, 14.5, 14.6, 14.17, 14.27, 14.37, 14.47) formant la rainure (4, 4.1b, 4.4, 4.5, 4.6, 4.7) sont réalisées sur un élément en tôle (2, 2.4, 2.5, 2.6, 2.17, 2.27, 2.37, 2.47, 2.8, 2.82, 3, 3.1b, 3.4, 3.5, 3.6, 3.17, 3.27, 3.37, 3.47, 3.8, 3.82), tandis que l'autre élément en tôle (3, 3.1b, 3.4, 3.5, 3.6, 3.17, 3.27, 3.37, 3.47, 3.8, 3.82, 2, 2.4, 2.5, 2.6, 2.17, 2.27, 2.37, 2.47, 2.8, 2.82) ne forme qu'une selle surface d'appui (13, 13.4, 13.5, 13.6, 13.17, 13.27, 13.37, 13.47, 11, 11.4, 11.5, 11.6, 11.17, 11.27, 11.37, 11.47).

8. Agencement d'étanchéité (1, 1.1, 1.1b, 1.2, 1.3, 1.4, 1.5, 1.17, 1.27, 1.37, 1.47) selon la revendication 5 ou 6, **caractérisé en ce que** sur chaque élément en tôle (2, 2.4, 2.5, 2.6, 2.17, 2.27, 2.37, 2.47, 2.8, 2.82, 3, 3.1b, 3.4, 3.5, 3.6, 3.17, 3.27, 3.37, 3.47, 3.8, 3.82) sont réalisées au moins des régions partielles d'au moins deux surfaces d'appui (11, 11.4, 11.5, 11.6, 11.17, 11.27, 11.37, 11.47, 12, 12.4, 12.5, 12.6, 12.17, 12.27, 12.37, 12.4, 13, 13.4, 13.5, 13.6, 13.17, 13.27, 13.37, 13.47, 14, 14.4, 14.5, 14.6, 14.17, 14.27, 14.37, 14.47) formant la rainure (4, 4.1b, 4.4, 4.5, 4.6, 4.7) pour le dispositif d'étanchéité (5, 44, 61).

9. Agencement d'étanchéité (1, 1.1, 1.1b, 1.2, 1.3, 1.4, 1.5, 1.17, 1.27, 1.37, 1.47) selon l'une quelconque des revendications 1 à 8, **caractérisé en ce que** la connexion entre le ou les éléments en tôle (2, 2.4, 2.5, 2.6, 2.17, 2.27, 2.37, 2.47, 2.8, 2.82, 3, 3.1b, 3.4, 3.5, 3.6, 3.17, 3.27, 3.37, 3.47, 3.8, 3.82) et l'élément (20, 21, 17, 36, 29, 37, 87) délimitant la chambre (26, 27, 30, 31) pouvant être sollicitée par un fluide sous pression, est réalisée par engagement par correspondance géométrique sous forme de connexion rivetée, le rivetage s'effectuant au moyen de rivets séparés ou au moyen de rivets (53) extrudés hors de l'élément de raccordement.

10. Agencement de double embrayage, en particulier agencement de double embrayage humide (15), comprenant une entrée (E) et deux sorties (A) et à chaque fois un premier dispositif d'embrayage (K1) et un deuxième dispositif d'embrayage (K2) disposés coaxialement l'un par rapport à l'autre entre l'entrée et l'une des sorties, chaque dispositif d'embrayage (K1, K2) présentant un dispositif de commande (18, 19) qui comprend un élément de piston (20, 21) et au moins une chambre (26, 27, 30, 31) associée à celui-ci et pouvant être sollicitée par un fluide sous pression, la chambre (26, 27, 30, 31) pouvant être sollicitée par un fluide sous pression étant étanchéifiée vis-à-vis du reste de l'espace interne (16) de l'agencement de double embrayage (15), **caractérisé en ce que** l'étanchéité d'au moins une chambre individuelle (26, 27, 30, 31) pouvant être sollicitée par un fluide sous pression est réalisée au moyen d'au moins un agencement d'étanchéité (1, 1.1, 1.1b, 1.2, 1.3, 1.4, 1.5, 1.17, 1.27, 1.37, 1.47) selon l'une quelconque des revendications 1 à 9.

11. Agencement de double embrayage (15) selon la revendication 10, **caractérisé en ce qu'**une chambre (26) pouvant être sollicitée par un fluide sous pression, servant de chambre de pression, est associée à l'élément de piston (20) du premier dispositif d'embrayage (K1), et un agencement d'étanchéité (1, 1.1, 1.1b, 1.2, 1.3, 1.4, 1.5, 1.17) est disposé entre l'élément de piston (20) et une paroi du boîtier (29) délimitant la chambre (26).

12. Agencement de double embrayage (15) selon l'une quelconque des revendications 10 ou 11, **caractérisé en ce qu'**une chambre (27) pouvant être sollicitée par un fluide sous pression, servant de chambre de compensation, est associée à l'élément de piston (20) du premier dispositif d'embrayage (K1), et un agencement d'étanchéité (1, 1.2, 1.3, 1.4, 1.5, 1.27) est disposé entre l'élément de piston (20) et une paroi du boîtier (17) délimitant la chambre (27).

13. Agencement de double embrayage (15) selon l'une quelconque des revendications 10 à 12, **caractérisé en ce qu'**une chambre (30) pouvant être sollicitée par un fluide sous pression, servant de chambre de pression, est associée à l'élément de piston (21) du deuxième dispositif d'embrayage (K2), et un agencement d'étanchéité (1, 1.3, 1.37, 1.5) est disposé entre l'élément de piston (20) et une paroi du boîtier (87, 34) délimitant la chambre (26).

14. Agencement de double embrayage (15) selon l'une quelconque des revendications 10 à 13, **caractérisé en ce qu'**une chambre (31) pouvant être sollicitée par un fluide sous pression, servant de chambre de compensation, est associée à l'élément de piston (21) du deuxième dispositif d'embrayage (K2), et un agencement d'étanchéité (1, 1.4, 1.47) est disposé entre l'élément de piston (21) et une paroi du boîtier (29) délimitant la chambre (30).
